(19) Europäisches Patentamt / European Patent Office / Office européen des brevets

(11) **EP 3 895 361 B1**

(12) **EUROPEAN PATENT SPECIFICATION**

(45) Date of publication and mention of the grant of the patent:
**01.01.2025 Bulletin 2025/01**

(21) Application number: **20745826.6**

(22) Date of filing: **22.01.2020**

(51) International Patent Classification (IPC):
**H04L 5/00** *(2006.01)*     **H04L 27/26** *(2006.01)*

(52) Cooperative Patent Classification (CPC):
**H04L 5/0044; H04L 5/0007; H04L 5/0094; H04L 27/2607; H04L 27/2636;** H04L 27/2613

(86) International application number:
**PCT/KR2020/001077**

(87) International publication number:
**WO 2020/153743 (30.07.2020 Gazette 2020/31)**

(54) **METHOD AND APPARATUS FOR SINGLE-CARRIER TRANSMISSION IN MILLIMETER-WAVE WIRELESS COMMUNICATION SYSTEM**

VERFAHREN UND VORRICHTUNG ZUR EINZELTRÄGERÜBERTRAGUNG IN EINEM DRAHTLOSEN MILLIMETERWELLENKOMMUNIKATIONSSYSTEM

PROCÉDÉ ET DISPOSITIF DE PROGRAMMATION H-ARQ DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2019 KR 20190010125**

(43) Date of publication of application:
**20.10.2021 Bulletin 2021/42**

(73) Proprietor: **Samsung Electronics Co., Ltd.**
**Suwon-si, Gyeonggi-do 16677 (KR)**

(72) Inventors:
• **JI, Hyoungju**
**Suwon-si, Gyeonggi-do 16677 (KR)**

• **KIM, Taehyoung**
**Suwon-si, Gyeonggi-do 16677 (KR)**
• **YANG, Heecheol**
**Suwon-si, Gyeonggi-do 16677 (KR)**
• **LEE, Juho**
**Suwon-si, Gyeonggi-do 16677 (KR)**

(74) Representative: **Nederlandsch Octrooibureau**
**P.O. Box 29720**
**2502 LS The Hague (NL)**

(56) References cited:
WO-A1-2017/219788    US-A1- 2012 008 700
US-A1- 2018 288 749    US-A1- 2018 294 916
US-A1- 2018 302 186    US-A1- 2018 367 362
US-A1- 2019 021 080

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The disclosure relates to a method and an apparatus for communication between a base station and a terminal in a millimeter-wave wireless communication system and, more particularly, to a method and an apparatus wherein a base station multiplexes multiple terminals by a single carrier. In addition, the disclosure relates to a method and an apparatus for supporting multiple base stations so as to multiplex multiple terminals by means of a single carrier.

**Background Art**

In order to meet wireless data traffic demands that have increased after 4G communication system commercialization, efforts to develop an improved 5G communication system or a pre-5G communication system have been made. For this reason, the 5G communication system or the pre-5G communication system is called a beyond 4G network communication system or a post LTE system. In order to achieve a high data transmission rate, an implementation of the 5G communication system in a mmWave band (for example, 60 GHz band) is being considered. In the 5G communication system, technologies such as beamforming, massive MIMO, Full Dimensional MIMO (FD-MIMO), array antenna, analog beam-forming, and large scale antenna are being discussed as means to mitigate a propagation path loss in the mm Wave band and increase a propagation transmission distance. Further, the 5G communication system has developed technologies such as an evolved small cell, an advanced small cell, a cloud Radio Access Network (RAN), an ultra-dense network, Device to Device communication (D2D), a wireless backhaul, a moving network, cooperative communication, Coordinated Multi-Points (CoMP), and received interference cancellation to improve the system network. In addition, the 5G system has developed Advanced Coding Modulation (ACM) schemes such as Hybrid FSK and QAM Modulation (FQAM) and Sliding Window Superposition Coding (SWSC), and advanced access technologies such as Filter Bank Multi Carrier (FBMC), Non Orthogonal Multiple Access (NOMA), and Sparse Code Multiple Access (SCMA).

Meanwhile, the Internet has been evolved to an Internet of Things (IoT) network in which distributed components such as objects exchange and process information from a human-oriented connection network in which humans generate and consume information. An Internet of Everything (IoE) technology in which a big data processing technology through a connection with a cloud server or the like is combined with the IoT technology has emerged. In order to implement IoT, technical factors such as a sensing technique, wired/wireless communication, network infrastructure, service-interface technology, and security technology are required, and research on technologies such as a sensor network, Machine-to-Machine (M2M) communication, Machine-Type Communication (MTC), and the like for connection between objects has recently been conducted. In an IoT environment, through collection and analysis of data generated in connected objects, an intelligent Internet Technology (IT) service to create a new value for peoples' lives may be provided. The IoT may be applied to fields, such as a smart home, smart building, smart city, smart car, connected car, smart grid, health care, smart home appliance, or high-tech medical service, through the convergence of the conventional Information Technology (IT) and various industries.

Accordingly, various attempts to apply the 5G communication to the IoT network are made. For example, the 5G communication technology, such as a sensor network, machine-to-machine (M2M) communication, and machine-type communication (MTC), has been implemented by a technique, such as beamforming, MIMO, and array antennas. The application of a cloud RAN as the big data processing technology may be an example of convergence of the 5G technology and the IoT technology.

In general, mobile communication systems have been developed for the purpose of providing communication while securing users' mobility. Intense development of technologies has enabled mobile communication systems to evolve to such an extent that, not only voice communication, high-speed data communication services can also be provided. There has recently been ongoing standardization of a new radio (NR) system in the 3rd generation partnership project (3GPP), which is one of next-generation mobile communication systems. The NR system has been developed to satisfy various network requirements and to accomplish a wide range of performance targets, and this technology is particularly aimed at implementing communication in millimeter-wave bands. Hereinafter, the NR system may be understood as encompassing 5G NR systems supporting microwaves including communication in millimeter-wave bands of 6 GH or higher, 4G LTE systems, and LTE-A systems.

The above information is presented as background information only to assist with an understanding of the disclosure. No determination has been made, and no assertion is made, as to whether any of the above might be applicable as prior art with regard to the disclosure.

The relevant prior art consists in the following documents: US 2018/288749 A1 (SUN JING [US] ET AL) 4 October 2018 and US 2018/302186 A1 (REDDY AKULA [US] ET AL) 18 October 2018.

## Disclosure of Invention

Technical Problem

In a millimeter-wave (mmWave) band of 6 GHz or higher in which the NR system can be supported, signals need to be transmitted by using a large amount of power, in order to compensate for the high degree of path loss between a base station and a terminal, as well as signal attenuation. In this case, it is difficult to employ any multi-carrier transmission technology. Accordingly, the disclosure proposes a method and an apparatus for effectively transmitting/receiving signals by using a single carrier in a mmWave band.

## Solution to Problem

The object of the invention is achieved by the subject-matter of the independent claims. The dependent claims describe advantageous embodiments. The scope of protection of the invention is limited by the appended claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

## Advantageous Effects of Invention

According to an embodiment, a base station may simultaneously support one or more terminals by using a single carrier with a high frequency efficiency. Moreover, the base station may dynamically adjust the CP, thereby improving the data transmission efficiency.

## Brief Description of Drawings

For a more complete understanding of the present disclosure and its advantages, reference is now made to the following description taken in conjunction with the accompanying drawings, in which like reference numerals represent like parts:

FIG. 1A illustrates a diagram of a time-frequency domain, which is an NR system resource area;
FIG. 1B illustrates a diagram of a slot structure considered in an NR system;
FIG. 1C illustrates a diagram of a communication system configured to transmit/ receive data between a base station and a terminal;
FIG. 2 illustrates a diagram of an exemplary method for transmitting a downlink SCW proposed in the disclosure;
FIG. 3 illustrates a diagram of a method for multiplexing one or more terminals to one symbol and transmitting the same in an SCW system to which an embodiment is applied;

FIG. 4 illustrates a diagram of a method for determining the size of M, which is the size of DFT (or size of SCW bandwidth) according to the disclosure;

FIG. 5A illustrates a diagram of a fourth method for solving a problem occurring if an SCW uses a bandwidth larger than a bandwidth allowed by a transmitting filter;

FIG. 5B illustrates a diagram of a fifth method for solving a problem occurring if an SCW uses a bandwidth larger than a bandwidth allowed by a transmitting filter;

FIG. 6A illustrates a diagram of a sixth method for solving a problem occurring if an SCW uses a bandwidth larger than a bandwidth allowed by a transmitting filter;

FIG. 6B illustrates a diagram of another exemplary method for performing the sixth method for solving a problem occurring if an SCW uses a bandwidth larger than a bandwidth allowed by a transmitting filter;

FIG. 7A illustrates a diagram of an exemplary method for transmitting a DMRS and data by using a method proposed in the disclosure, FIG. 7B illustrates a diagram of an exemplary method for transmitting a DMRS and data by using a method proposed in the disclosure, and FIG. 7C illustrates a diagram of an exemplary method for transmitting a DMRS and data by using a method proposed in the disclosure;

FIG. 8AA illustrates a diagram of an exemplary method for dynamically adjusting a CP when using single-carrier transmission proposed in the disclosure, and FIG. 8AB illustrates a diagram of an exemplary method for dynamically adjusting a CP when using single-carrier transmission proposed in the disclosure;

FIG. 8BA illustrates a diagram of another exemplary method for dynamically adjusting the length of a CP, and FIG. 8BB illustrates a diagram of another exemplary method for dynamically adjusting the length of a CP;

FIG. 9A illustrates a diagram of an example of generating a zero-power sample in connection with single-carrier transmission proposed in the disclosure;

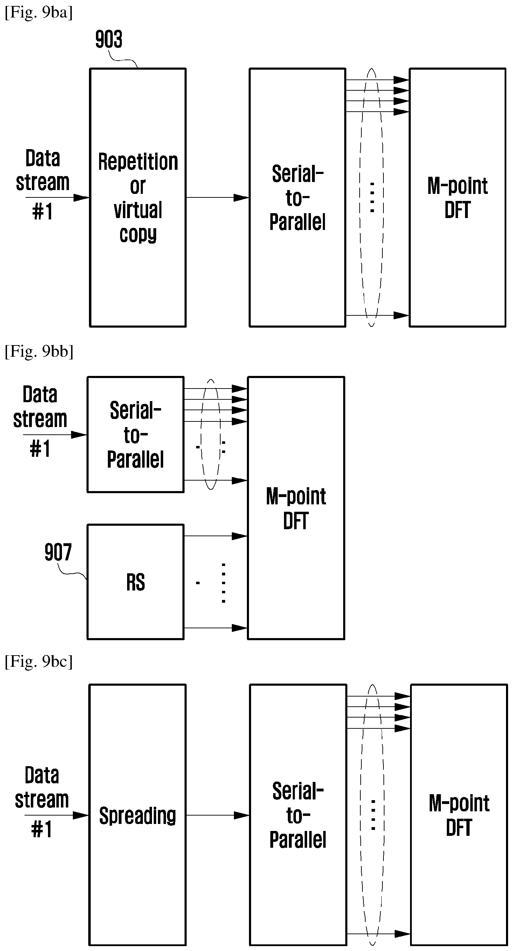

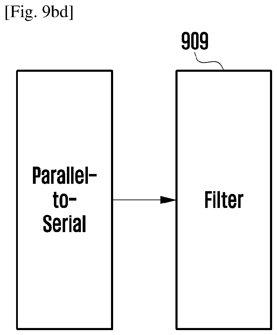

FIG. 9BA illustrates a diagram of a method for preventing generation of a zero-power sample in connection with single-carrier transmission proposed in the disclosure, FIG. 9BB illustrates a diagram of a method for preventing generation of a zero-power sample in connection with single-carrier transmission proposed in the disclosure, FIG. 9BC illustrates a diagram of a method for preventing generation of a zero-power sample in connection with single-carrier transmission proposed in the disclosure, and FIG. 9BD illustrates a diagram of a method for preventing generation of a zero-power sample in connection with single-carrier transmission proposed in the disclosure,

FIG. 10 illustrates a diagram of an exemplary method wherein one or more base stations using single-carrier transmission proposed in the disclosure support a single terminal by using a continuous virtual resource;

FIG. 11 illustrates a diagram of an exemplary method wherein one or more base stations using single-carrier transmission proposed in the disclosure support a single terminal by using a discontinuous virtual resource;

FIG. 12 illustrates a diagram of operations of a base station transmitting a data channel according to the disclosure;

FIG. 13A illustrates a diagram of operations of a base station transmitting data by using a single carrier;

FIG. 13B illustrates a diagram of operations of a terminal receiving signals by using a single carrier;

FIG. 14 illustrates a diagram of operations of one or more base stations supporting a single terminal by using the same single-carrier bandwidth;

FIG. 15 illustrates a diagram of a base station device according to the disclosure; and

FIG. 16 illustrates a diagram of a terminal device according to the disclosure.

## Mode for the Invention

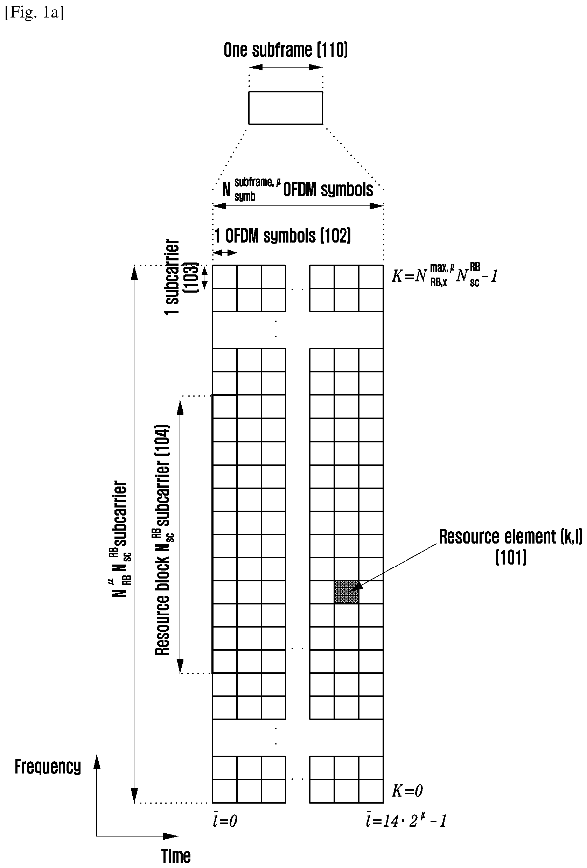

FIGS. 1A through 16, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, embodiments of the disclosure will be described in detail with reference to the accompanying drawings.

In describing the exemplary embodiments of the disclosure, descriptions related to technical contents which are well-known in the art to which the disclosure pertains, and are not directly associated with the disclosure, will be omitted. This omission of the unnecessary description is intended to prevent the main idea of the disclosure from being unclear and more clearly transfer the main idea.

For the same reason, in the accompanying drawings, some elements may be exaggerated, omitted, or schematically illustrated. Further, the size of each element does not entirely reflect the actual size. In the drawings, identical or corresponding elements are provided with identical reference numerals.

The advantages and features of the disclosure and methods of achieving the same will be apparent by referring to embodiments of the disclosure as described below in detail in conjunction with the accompanying drawings. However, the disclosure is not limited to the embodiments described below, and may be implement in various different forms. The embodiments are provided only to make the disclosure complete and to help a person skilled in the art to which the disclosure pertains fully understand the scope of the disclosure. The disclosure is to be defined only by the scope of the claims. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. However, the "unit does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, "unit" or divided into a larger number of elements, "unit". Moreover, the elements and "units" may be implemented to reproduce one or more CPUs within a device or a security multimedia card. In addition, " 쩐 unit" may include one or more processors in embodiments.

An embodiment is for the purpose of a communication system configured to transmit a downlink signal from a base station to a terminal in an NR system, for example. A downlink signal of the NR includes a data channel through which data information is transmitted, a control channel through which control information is transmitted, and a reference signal (RS) for channel measurement and channel feedback.

Specifically, an NR base station may transmit data and control information to a terminal through a physical downlink shared channel (PDSCH) and a physical downlink control channel (PDCCH), respectively. The NR base station may have multiple RSs, and the multiple RSs may include at least one of a channel state information RS (CSI-RS) and a demodulation reference signal (DMRS) or a terminal-dedicated reference signal. The NR base station transmits the DMRS only in an area scheduled for data transmission, and transmits the CIS-RS by using time and frequency axis resources in order to acquire channel information for data transmission. Hereinafter, data channel transmission/reception may be understood as data transmission/reception through a data channel, and control channel transmission/ reception may be understood as control information transmission/reception through a control channel.

The communication between a base station and a terminal in a wireless communication system is heavily affected by the radio-wave environment. Particularly, in the 60 GHz band, severe signal attenuation occurs due to moisture and oxygen in the atmosphere, and a small scattering effect resulting form small wavelengths severely interferes with signal delivery. Accordingly, base stations can secure the coverage only if signals are transmitted using a larger amount of power. If signals are transmitted using a large amount of transmission power, the multi-carrier transmission technology, which can overcome the multi-path delivery effect with an excellent performance, cannot be employed because of the high peak to average power ratio (PAPR). However, performing single-carrier transmission to use a larger amount of transmission power has a problem in that user multiplexing is difficult, and channel estimation and multi-path signal channel estimation performance degrades. In addition, an analog beam (hereinafter, interchangeably referred to as a beam, and may be understood herein as a signal having directivity) is used in the case of a millimeter wave to overcome the severe path loss. The bandwidth of the analog beam is reduced in line with the very short wavelength of the millimeter wave, and this makes multi-user support more difficult. Consequently, it is difficult to guarantee a system performance in the millimeter-wave band at a technical level comparable to that in the micro-wave band.

Accordingly, the disclosure proposes a method and an apparatus for effectively supporting user multiplexing by using a single carrier in a mmWave band, and the method and apparatus will be described with regard to a scenario wherein a base station operates a single carrier, in particular.

The NR system has been developed to satisfy various network requirements, and services supported in the NR system may be classified into the following categories: enhanced mobile broadband (eMBB), massive machine type communications (mMTC), ultra-reliable and low-latency communications (URLLC), and the like. The eMBB is a service aimed at high-speed transmission of a large amount of data, the mMTC is a service aimed at minimizing power consumed by terminals and accessing multiple terminals, and the URLLC is a service aimed at high reliability and low latency. Different requirements may be applied depending on the type of service applied to the terminal.

FIG. 1A illustrates a diagram of the structure of a time-frequency domain, which is an NR system resource area.

In FIG. 1A, the horizontal axis refers to a time domain, and the vertical axis refers to a frequency domain. The basic unit of resources in the time and frequency domains is a resource element (RE) 101, which may be defined in terms of one orthogonal frequency division multiplexing (OFDM) symbol 102 along the time axis and one subcarrier 103 along the frequency axis. In the frequency domain, $N_{SC}^{RB}$ (for example, twelve) continuous REs may constitute one resource block (RB) or physical resource block (PRB) 104.

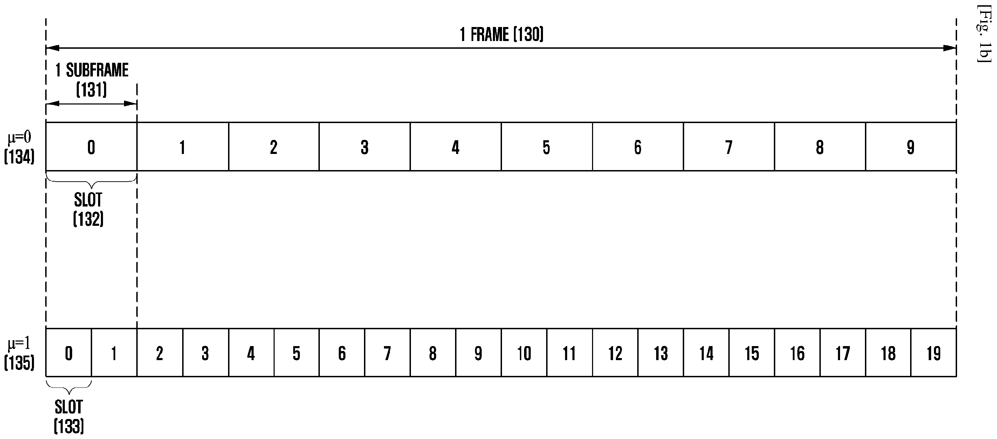

FIG. 1B illustrates a diagram of a slot structure considered in an NR system.

FIG. 1B illustrates exemplary structures of a frame 130, a subframe 131, and a slot 132. One frame 130 may be defined as 10ms. One subframe 131 may be defined as 1ms. Accordingly, one frame 130 may include a total of ten subframe 131. One slot 132 or 133 may be defined as 14 OFDM symbols (that is, the number of symbols per slot $N_{symb}^{slot}$ is 14). One subframe 201 may include one or multiple slots 132 or 133. The number of slots 132 or 133 per subframe 131 may vary depending on the configuration value $\mu$ 134 or 135 regarding the subcarrier spacing. FIG. 1B illustrates exemplary cases in which the subcarrier spacing configuration value is $\mu$ =0 134 and $\mu$ =1 135, respectively. In the case of $\mu$ =0 134, one subframe 131 may include one slot 132, and in the case of $\mu$ =1 135, one subframe 131 may include two slots 133. That is, the number $N_{slot}^{subframe,\mu}$ of slots per subframe may vary depending on the subcarrier spacing configuration value $\mu$, and the number $N_{slot}^{frame,\mu}$ of slots per frame may vary accordingly. $N_{slot}^{subframe,\mu}$ and $N_{slot}^{frame,\mu}$ may be defined, according to each subcarrier spacing configuration $\mu$, as in Table 1 below:

[Table 1]

| $N_{slot}^{frame,\mu}$ | $N_{slot}^{subframe,\mu}$ |
|---|---|
| 10 | 1 |
| 20 | 2 |
| 40 | 4 |
| 80 | 8 |
| 160 | 16 |
| 320 | 32 |
| 640 | 64 |

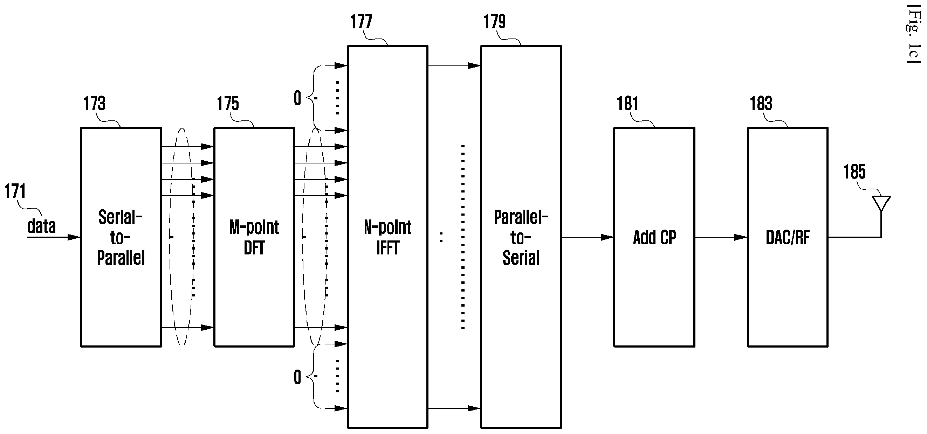

FIG. 1C illustrates a diagram of a communication system configured to transmit/ receive data between a base station and a terminal.

Referring to FIG. 1C, the transmitter is a system capable of OFDM transmission, and may transmit a single carrier (SC) in a bandwidth in which OFDM transmission is possible. The transmitter 170 may include a serial-to-parallel (S-P) converter 173, a single-carrier precoder 175, an inverse fast Fourier transform unit 177, a parallel-to-serial (P-S) converter 179, a cyclic prefix (CP) inserter 181, an analog signal unit 183 (which may include a digital-to-analog convertor (DAC) and an RF), and an antenna module 185.

Data 171 having a size of M (data sequence having a vector size of M) that has undergone channel coding and modulation is converted to a parallel signal by the S-P converter 173, and is then converted to a SC waveform (SCW) by the SC precoder 175. The device 175 for converting a parallel signal to an SCW may be implemented in various methods, such as a method of using a discrete Fourier transform (DFT) precoder, a method of using up-converting, a method of using code-spreading, and the like. The disclosure may include various precoding methods. Although the disclosure will be described with reference to an SCW generating method using an DFT precoder, for convenience of description, embodiments are equally applicable to other cases in which the SCW is generated by other methods.

The size of the DFT is equal to M. A data signal that has passed through a DFT precoder (or DFT filter) having a length of M is converted to a wideband frequency signal through the N-point IFFT unit 177. The N-point IFFT processor is configured to transmit parallel signals through respective subcarriers of a channel bandwidth divided into N subcarriers.

However, in the case of FIG. 1, DFT precoding with length M has been performed before N-point IFT processing. Accordingly, a signal that has undergone DFT precoding is transmitted through a single carrier with reference to a center carrier of a bandwidth to which a signal that has undergone DFT precoding with length M is mapped. The signal (data) that has undergone N-point IFFT processing undergoes a process of the P-S processor 179 and is stored as N samples. Some samples in the rear part of the stored N samples are copied and adjoined to the front part. This process is performed by the CP inserter 181.

Thereafter, the signal undergoes a pulse-shaping filter, such as a raised cosine filter, and is delivered to the analog signal unit 183, in which the signal undergoes a digital-to-analog conversion process (through a power amplifier (PA) or the like) and thus is converted to an analog signal. The converted analog signal is delivered to the antenna module 185 and thereby radiated into the atmosphere.

In general, an SCW signal is transmitted in such a manner that M precoded signals are mapped to M desired continuous subcarriers and then transmitted, and this process may occur in the IFFT unit 177. Accordingly, the size of M is determined according to the size of transmitted data or the amount of time symbols used by the transmitted data. In general, the size of M is substantially smaller than N, because SCWs are signals characterized by having a small peak-to-average ratio (PAPR).

The PAPR refers to the magnitude of a change in the transmission power of a sample of a transmitted signal. A large PAPR means a large dynamic range of the PA of the transmitter. This means that a large power margin is necessary to operate the PA. In this case, the transmitter configures a high margin of the PA available in case the change will be large. As a result, the maximum power that the transmitter can use decreases, thereby reducing the maximum possible communication distance between the transmitter and the receiver. On the other hand, in the case of an SCW having a small PAPR, the change in the PA is very small. Accordingly, the PA can be operated even if the margin is configured to be small, and the maximum communication distance thus increases.

Since radio-wave attenuation is severe in the case of a mmWave wireless communication system, it is important to secure the communication distance. Accordingly, it is advantageous for the base station to employ a technology that increases the maximum communication distance, such as the SCW. In general, the SCW has a smaller PAPR than a multi-carrier waveform (MCW), and thus has a large margin of 5-6dB. Accordingly, an SCW transmitter can use maximum transmission power larger than that of an MCW transmitter, and the communication distance can thus increase. Such an SCW as in FIG. 1 is normally used for a terminal having a small upper limit of maximum transmission power, as in the case of the uplink, and has been employed for uplink transmission of an LTE system, in particular. Particularly, terminals do not have a large upper limit of maximum transmission power, and the uplink transmission power is insufficient. Accordingly, it is impossible to configure a large M size, and M decreases as transmission power lacks. Consequently, the transmission distance can be guaranteed by reducing M.

In addition, in the case of the uplink, signals transmitted by one terminal is received by the base station. Accordingly, there is no need to consider a case in which more than one terminals transmit signals by using a single carrier. On the other hand, in the case of a mmWave wireless system, power shortage occurs in the downlink as well due to radio-wave attenuation. In the case of the downlink, the base station inevitably transmits signals for more than one terminals, and this needs to be supported.

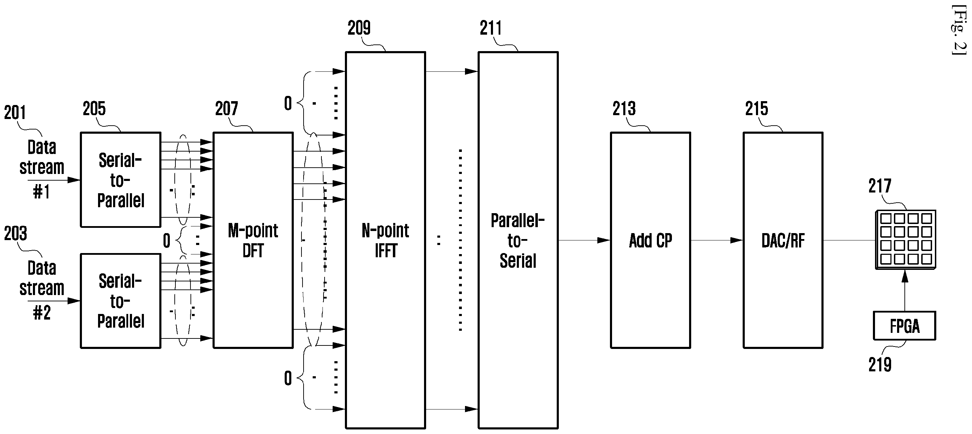

FIG. 2 illustrates a diagram of an exemplary method for transmitting a downlink SCW proposed in the disclosure. The SCW transmission proposed in the disclosure refers to a method wherein a base station transmits data to one or more terminals through the same SCW, and the base station transmits signals by using a single SCW for one symbol. However, a terminal that receives signals may receive one or more SCWs through the same symbol.

A terminal may receive at least one piece of configuration information regarding which time-frequency resource is transmitted by using a single SCW, and this may be delivered through system information by means of high-layer signaling. As used herein, high-layer signaling includes system information transmitted through a physical broadcast channel and/or a signal that delivers system information, such as a system information block (SIB) and/or a radio resource control (RRC) signal. The configuration information includes information regarding a time resource to which SCW transmission is applied (for example, the index and period of a slot) and frequency resource information (for example, the index of a continuous frequency resource or a resource block (RB) corresponding thereto, or the start index and end index of the RB, or the start and length of the RB, or information delivering identical information thereto). In addition, the configuration information includes: information regarding time/frequency synchronization through a reference signal, such as a primary synchronization signal (PSS), a secondary synchronization signal (SSS), and a DMRS, which needs to be referred to in order to receive the corresponding resource; base station information (base station ID); channel parameter information such as delay spread and average delay power; beam information (beam index); or interworking information such as a synchronization signal block (SSB) index. The interworking information refers to information determining the value of various parameters necessary for the receiver to receive a SCW signal. In addition, the system information may include at least one of the size of a bandwidth used for SCW transmission, or the size (M) of the DFT, or the size of the bandwidth and the index of a subcarrier, through which the center frequency is transmitted, or the size of the bandwidth, and the index of a subcarrier corresponding to the end of the bandwidth.

Referring to FIG. 2, data stream #1 and data stream #2 201 and 203, which are data signals transmitted to different terminals, respectively, undergo channel coding and modulation, undergo S-P conversion, and pass through the M-point DFT 207 (SCW precoder). The size of the data vector of data stream #1 and data stream #2 has a total length of M. Thereafter, M samples go through the N-point IFFT 209 and undergo P-S conversion 211. A CP is added thereto (213), and the M samples then undergo digital-to-analog conversion 215 such that they are converted to analog signals, which are delivered to the antenna module 217. In the case of a mmWave wireless system, an analog beam is used to additionally compensate for path loss. Using a beam means that a signal that has undergone analog conversion is subjected to space-utilizing post-processing (post-coding) (not a process of space-utilizing pre-processing of data streams #1 and #2 201 and 203 which are digital signals for beam formation, in general). Accordingly, a separate circuit 219 (which may be an FPGA) is necessary to operate the same, and this circuit plays the role of adjusting the coefficient of each antenna element (AE) such that signals are delivered in a desired direction.

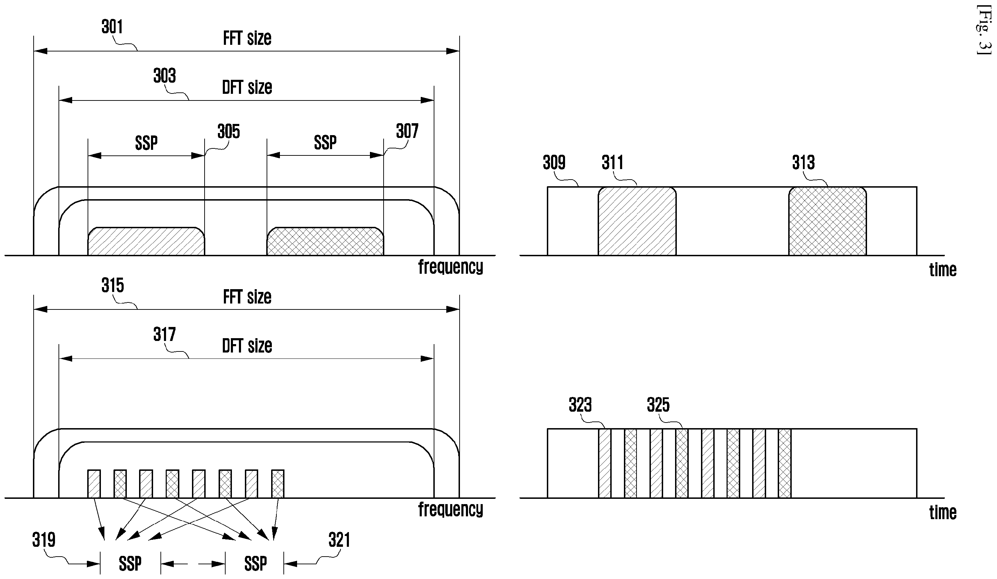

The technology proposed in the disclosure relates to a case in which a single base station transmits signals by using a single SCW, regardless of the number of terminals to which the base station transmits signals. The method for multiplexing between terminals is as illustrated in FIG. 3.

FIG. 3 illustrates a diagram of a method for multiplexing one or more terminals to one symbol and transmitting the same in an SCW system to which an embodiment is applied. The disclosure proposes a method wherein different samples are selected from M samples that are necessary before SC precoding, and then transmitted. According to FIG. 3, the FFT size 301 along the frequency axis may correspond to N in FIG. 1C and FIG. 2, and the DFT size 303 (corresponding to the size of the bandwidth of the SCW) may correspond to M in FIG. 1C and FIG. 2. The sample of terminal 1 may correspond to the sub-symbol part (SSP) 305, and the sample used by terminal 2 may correspond to the SSP 307. In the proposed method as illustrated in FIG. 3, the total amount 303 and 307 of samples used by one or more terminals may be equal to or smaller than M.

If two terminals are multiplexed to M samples, for example, respective terminals may receive information of the size N 301 of the entire FFT from the base station, or may implicitly recognize the same, and may receive information of the size 303 of the bandwidth of the SCW through system information. If the size 303 is M, the potential resource 305 used by terminal 1 may be transmitted from the base station to the terminal through high-layer signaling as information regarding the position of continuous resources among M resources, or the starting and ending points of the resource, or the starting point and the length of the resource. The potential resource 307 used by terminal 2 may also be transmitted from the base station to the terminal through high-layer signaling as information regarding the position of continuous resources among M resources, or the starting and ending points of the resource, or the starting point and the length of the resource. Such resource information may be delivered as a bitmap, or in a decimally converted form, or as a table-based indication, or by using a material pre-recorded in a memory, or by using information configured through a reconfigurable memory. For example, if the SCW bandwidth size (or M) is indicated as a multiple of 12 subcarriers, the relation may be configured as in Table 2 below:

[Table 2]

| 2 | 3 | 5 | Subcarriers | Number of RBs |
|---|---|---|---|---|
| 2 | 1 | 0 | 12 | 1 |
| 3 | 1 | 0 | 24 | 2 |
| 2 | 2 | 0 | 36 | 3 |
| 4 | 1 | 0 | 48 | 4 |
| 2 | 1 | 1 | 60 | 5 |
| 3 | 2 | 0 | 72 | 6 |
| 5 | 1 | 0 | 96 | 8 |
| 2 | 3 | 0 | 108 | 9 |
| 3 | 1 | 1 | 120 | 10 |
| 4 | 2 | 0 | 144 | 12 |
| 2 | 2 | 1 | 180 | 15 |
| 6 | 1 | 0 | 192 | 16 |
| 3 | 3 | 0 | 216 | 18 |
| 4 | 1 | 1 | 240 | 20 |

(continued)

| 2 | 3 | 5 | Subcarriers | Number of RBs |
|---|---|---|---|---|
| 5 | 2 | 0 | 288 | 24 |
| 2 | 1 | 2 | 300 | 25 |
| 2 | 4 | 0 | 324 | 27 |
| 3 | 2 | 1 | 360 | 30 |
| 7 | 1 | 0 | 384 | 32 |
| 4 | 3 | 0 | 432 | 36 |
| 5 | 1 | 1 | 480 | 40 |
| 2 | 3 | 1 | 540 | 45 |
| 6 | 2 | 0 | 576 | 48 |
| 3 | 1 | 2 | 600 | 50 |
| 3 | 4 | 0 | 648 | 54 |
| 4 | 2 | 1 | 720 | 60 |
| 8 | 1 | 0 | 768 | 64 |
| 5 | 3 | 0 | 864 | 72 |
| 2 | 2 | 2 | 900 | 75 |
| 6 | 1 | 1 | 960 | 80 |
| 2 | 5 | 0 | 972 | 81 |
| 3 | 3 | 1 | 1080 | 90 |
| 7 | 2 | 0 | 1152 | 96 |
| 4 | 1 | 2 | 1200 | 100 |
| 4 | 4 | 0 | 1296 | 108 |
| 5 | 2 | 1 | 1440 | 120 |
| 2 | 1 | 3 | 1500 | 125 |
| 9 | 1 | 0 | 1536 | 128 |
| 2 | 4 | 1 | 1620 | 135 |
| 6 | 3 | 0 | 1728 | 144 |
| 3 | 2 | 2 | 1800 | 150 |
| 7 | 1 | 1 | 1920 | 160 |
| 3 | 5 | 0 | 1944 | 162 |
| 4 | 3 | 1 | 2160 | 180 |
| 8 | 2 | 0 | 2304 | 192 |
| 5 | 1 | 2 | 2400 | 200 |
| 5 | 4 | 0 | 2592 | 216 |
| 2 | 3 | 2 | 2700 | 225 |
| 6 | 2 | 1 | 2880 | 240 |
| 3 | 1 | 3 | 3000 | 250 |
| 10 | 1 | 0 | 3072 | 256 |
| 3 | 4 | 1 | 3240 | 270 |
| 7 | 3 | 0 | 3456 | 288 |

(continued)

| 2 | 3 | 5 | Subcarriers | Number of RBs |
|---|---|---|---|---|
| 4 | 2 | 2 | 3600 | 300 |
| 8 | 1 | 1 | 3840 | 320 |
| 4 | 5 | 0 | 3888 | 324 |

Table 2 above enumerates sets of SCW bandwidth sizes, which are multiples of 12, among numbers configured by multiplying respective elements in the columns of 2, 3, and 5, which have fast SC precoding calculation speeds, among available SCW bandwidth sizes. Each item may be transmitted to the terminal through high-layer signal as a bitmap or an integer indicating the number of RBs. If the SCW bandwidth size is indicated by the number of RBs as a multiple of 12, the SCW table may be configured in as in Table 3 below:

[Table 3]

| 2 | 3 | 5 | Subcarrier | Number of RBs |
|---|---|---|---|---|
| 4 | 2 | 0 | 144 | 12 |
| 5 | 2 | 0 | 288 | 24 |
| 4 | 3 | 0 | 432 | 36 |
| 6 | 2 | 0 | 576 | 48 |
| 4 | 2 | 1 | 720 | 60 |
| 5 | 3 | 0 | 864 | 72 |
| 7 | 2 | 0 | 1152 | 96 |
| 4 | 4 | 0 | 1296 | 108 |
| 5 | 2 | 1 | 1440 | 120 |
| 6 | 3 | 0 | 1278 | 144 |
| 4 | 3 | 1 | 2160 | 180 |
| 8 | 2 | 0 | 2304 | 192 |
| 5 | 4 | 0 | 2592 | 216 |
| 6 | 2 | 1 | 2880 | 240 |
| 7 | 3 | 0 | 3456 | 288 |
| 4 | 2 | 2 | 32600 | 300 |
| 4 | 5 | 0 | 3888 | 324 |

Table 3 above enumerates sets of SCW bandwidth sizes, which have the number of RBs corresponding to a multiple of 12, and which have fast SC precoding speeds, among available SCW bandwidth sizes. Each item may be transmitted through high-layer signal as a bitmap or a constant (which may be an integer) indicating a group of RBs.

The resources 305 and 307 used by terminals 1 and 2 may be configured to be orthogonal to each other or to overlap each other. Since a resource transmitted through high-layer signaling is a potential resource (that is, resource that may be used for signal transmission), the transmission resource of the data channel actually transmitted may be a part of the potential resource 305 configured for terminal 1, and may be a part of the potential resource 307 configured for terminal 2. In order to support both terminals 1 and 2 in the same symbol, the positions of the actually transmitted data channels need to be configured to be orthogonal (that is, not to overlap) even if the potential resources may overlap. The resource of such an actually transmitted data channel may be indicated to each terminal through a control channel such as a physical downlink control channel (PDCCH).

If respective data channels are transmitted without overlapping, and if samples of a symbol 309 transmitted along the time axis are enumerated successively, data 305 mapped at a location having a small index on the frequency axis is transmitted first (311) on the time axis, and data 307 transmitted thereafter is then transmitted (313) on the time axis.

In addition, according to an embodiment proposed in the disclosure, discontinuous potential resources can be assigned to respective terminals. If the DFT size 317 is M, the discontinuous potential resource 319 used by terminal 1 may be indicated through high-layer signaling including information regarding the position of the discontinuous resource among the resource of M, or the starting point and interval of the discontinuous resource, or the starting point of the discontinuous resource, the length of a continuous resource, and the interval of the continuous resource. The discontinuous potential resource 321 used by terminal 2 may be indicated through high-layer signaling including information regarding the position of the discontinuous resource among the resource of M, or the starting point and interval of the discontinuous resource, or the starting point of the discontinuous resource, the length of a continuous resource, and the interval of the continuous resource. Such resource information may be delivered as a bitmap, or as a table-based indication, or by using a material pre-recorded in a memory, or by using information configured through a reconfigurable memory. The size of the discontinuous resource may be indicated by at least one unit selected from a sample, a subcarrier, one or more continuous subcarriers, an RB, and one or more continuous RBs. Resources 319 and 321 used by terminals 1 and 2 may be configured as resources which are orthogonal to each other or which overlap each other.

Since a resource transmitted through high-layer signaling is a potential resource, the transmission resource of the data channel actually transmitted may be a part of the potential resource 319 configured for terminal 1, and may be a part of the potential resource 321 configured for terminal 2. In order to support both terminals 1 and 2 in the same symbol, the positions of the actually transmitted data channels need to be configured to be orthogonal (that is, not to overlap) even if the potential resources may overlap. The resource of such an actually transmitted data channel may be indicated to each terminal through a control channel such as a PDCCH. If respective data channels are transmitted without overlapping, symbol samples transmitted to terminals 1 and 2 are transmitted while being enumerated in a temporally discontinuous and successive manner as indicated by 323 and 325. The method proposed in the disclosure can transmit data for one or more terminals through a single symbol, although a SCW is used, and this is possible by temporally dividing the symbol.

Accordingly, the concept of "bandwidth part (BWP)" used in NR systems is no longer valid, and according to the disclosure, sub-symbol parts (SSPs) 305, 307, 309, and 321 corresponding to parts of a time symbol are used. Through the SSPs, the base station can freely multiplex data through time division duplexing of the symbol, and time division duplexing between data channels, between a DMRS and data, between a DMRS and a PDCCH, between a DMRS, a PDCCH, and a PDCSCH, or between a PDCCH and a PDSCH is possible within one symbol. In addition, according to SSP resource assignment, samples constituting each symbol may be classified into samples that are used and samples that are not used. There is an advantage in that, by differently configuring such a resource configuration between users or between base stations, interference can be reduced.

The following is a description of the configuration of a radio resource control (RRC) information element according to an embodiment to which the disclosure is applied. According to an embodiment, a BWP information element or SSP information element may include at least one constituent element in Table 4 below:

[Table 4]

```
BWP ::= SEQUENCE {
    locationAndBandwidth INTEGER (0..37949),
    subcarrierSpacing SubcarrierSpacing,
    interleaved SEQUENCE {
    sample-BundleSize ENUMERATED {n6, n12, n24},
    interleaverSize ENUMERATED {n6, n12, n24},
    shiftIndex INTEGER(0..maxNrofVirtualResourceBlocks-1) OPTIONAL
     },
    nonInterleaved NULL
    transmissionComb CHOICE {
     SEQUENCE{
    combGroup ENUMERATED {n2, n4, n6},
    combOffset INTEGER (0..maxNrofCombOffset),
     },
    cyclicPrefix ENUMERATED { extended } OPTIONAL -- Need R
  }
```

In Table 4 above, "locationAndBandwidth" refers to the position of the starting point of the BWP and the bandwidth thereof, and "subcarrierSpacing" refers to the subcarrier spacing applied to the BWP. "Interleaved" indicates that the PRB for signal transmission inside the BWP is assigned discontinuously, and through "sampled-BundleSize", "interleaverSize", and "ShiftIndex", the interleaver input unit for discontinuous assignment, the interleaving unit, and the BWP-specific offset are indicated, respectively, "nonInterleaved" indicates that no interleaver is used. That is, a PRB for signal transmission inside the BWP is assigned continuously. "TransmissionComb" indicates that BWP resource assignment proceeds in a comb type. "combGroup" refers to a comb unit (subcarrier) and means that, unless "combGroup" is configured (or indicated), the unit is 1 (n1). That is, the same indicates that the comb may be configured with regard to each subcarrier.

"combOffset" denotes the comb of the actually used resource among resources distinguished by "combGroup". For example, if "combGroup" is configured as 2, a different comb is configured for every two subcarriers. It can be understood that, if the comb number is 3, and if "combOffset" is 0, $0^{th}$, $1^{st}$, $6^{th}$, $7^{th}$, $11^{th}$, and $12^{th}$ subcarrier are assigned.

Although it has been described that the information of Table 4 above is included in the BWP information element, the same may be included in an SSP information element. Alternatively, at least one piece of the above information may be included in a master information block (MIB), an SIB, or cell-common RRC information, such as BWP-DownlinkCommon, besides the BWP information element.

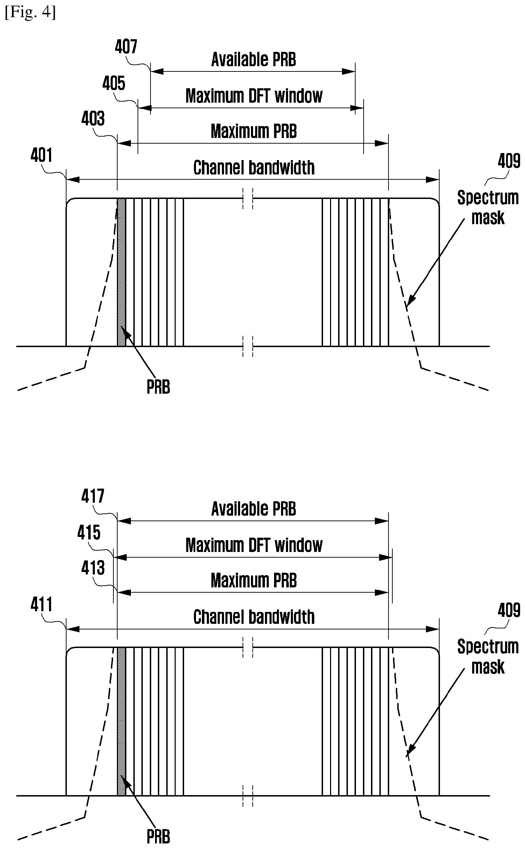

FIG. 4 illustrates a diagram of a method for determining the size of M, which is the size of DFT (or size of SCW bandwidth) according to the disclosure. The base station may consider the following issues in connection with determining the size of M. The SCW precoding device is an addition to an existing OFDM system, and thus requires an additional processing operation compared with the existing OFDM system, and the time necessary therefor needs to be minimized. To this end, in the case of an M-point DFT processor, the processing time can be shortened by using a specific M value only. A DFT processor having M configured as a product of exponentiations of 2, 3, and 5 is widely used because the precoding time can be substantially reduced through special hardware.

Referring to FIG. 4, reference numeral 401 denotes an assigned channel bandwidth, reference numeral 403 denotes a maximum assignable physical RB in view of characteristics of the transmitting filter (or spectrum mask) 409, and this may be understood as the maximum available resource. The maximum PRB 403 is given in such a manner that a partial frequency area of the channel bandwidth 401 is not used. If the bandwidth 405 actually used for SCW transmission is not identical to the size of the maximum available PRB 403, and if the size of M is configured to be smaller than reference numeral 403 in view of the size of the maximum available PRB 403, some resources 411 positioned at both ends of the maximum SCW size (or maximum DFT window) 405 cannot be used for data channel transmission. This causes a problem in that the maximum supportable transmission rate is lower than that of the existing NR system. In general, the frequency efficiency of the existing NR system is about 95-97%, but the frequency efficiency is reduced to 92-95% (by 3-5%) if the SCW is used. Table 5 below enumerates the number of RBs 403 according to the subcarrier spacing (SCS) available in a mmWave band and the channel bandwidth (BW) (MHz):

[Table 5]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 132 | 165 | 264 | 330 | | | | | | | | |
| 240 | 66 | 82 | 132 | 165 | 214 | 264 | 330 | | | | | |
| 480 | 33 | 41 | 66 | 82 | 107 | 132 | 165 | 264 | 289 | 330 | 361 | |
| 960 | 16 | 21 | 33 | 41 | 54 | 66 | 82 | 132 | 144 | 165 | 181 | 264 |

The number 403 of actually available subcarriers, based thereon, is given in Table 6 below:

[Table 6]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 1584 | 1980 | 3168 | 3960 | | | | | | | | |
| 240 | 792 | 984 | 1584 | 1980 | 2568 | 3168 | 3960 | | | | | |
| 480 | 396 | 492 | 792 | 984 | 1284 | 1584 | 1980 | 3168 | 3468 | 3960 | 4332 | |
| 960 | 192 | 252 | 396 | 492 | 648 | 792 | 984 | 1584 | 1728 | 1980 | 2172 | 3168 |

The SCW bandwidth 405 can be converted to the number of subcarriers based on Table 6 above, and the result is given in Table 7 below. Table 7 enumerates values configured as products of exponentiation of 2, 3, and 5, which are largest among numbers equal to or smaller than the number of actually usable subcarriers in Table 6, with regard to each channel bandwidth and subcarrier spacing. SC precoding can be conducted quickly by using a value in Table 7 as the SCW bandwidth (or DFT size).

[Table 7]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 1536 | 1944 | 3072 | 3888 | | | | | | | | |

(continued)

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 240 | 648 | 864 | 1536 | 1944 | 2400 | 3072 | 3888 | | | | | |
| 480 | | 480 | 768 | 972 | 1200 | 1536 | 1944 | 3072 | 3456 | 3888 | 4320 | |
| 960 | | 240 | 384 | 480 | 648 | 768 | 900 | 1536 | 1728 | 1944 | 2160 | 3072 |

Table 8 below enumerates frequency efficiencies calculated based on Table 7 above:

[Table 8]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 92.16 | 93.31 | 92.16 | 93.31 | | | | | | | | |
| 240 | 77.76 | 82.94 | 92.16 | 93.31 | 88.62 | 92.16 | 93.31 | | | | | |
| 480 | | 92.16 | 92.16 | 93.31 | 88.62 | 92.16 | 93.31 | 92.16 | 94.79 | 93.31 | 94.68 | |
| 960 | | 92.16 | 92.16 | 92.16 | 95.71 | 92.16 | 86.4 | 92.16 | 94.79 | 93.31 | 94.68 | 92.16 |

It is clear from Table 8 above that the frequency efficiency is about 92%, and drops to 90% or less in the case of some combinations of subcarrier spacings and channel bandwidths.

In order to solve this, the disclosure proposes a technology regarding a method wherein the SCW bandwidth 415 (which may be interpreted as the maximum DTF window, DFT size, or the like) is configured to be larger than the maximum available PRB 415 from products of exponentiations of 2, 3, and 5. According to the conventional method, the SCW bandwidth 405 is configured to be largest among products of respective exponentiations of 2, 3, and 5, but to be smaller than the maximum available PRB 403, but use of the proposed method can maintain the frequency efficiency at about 98%. However, this method has a problem in that the SCW uses a bandwidth larger than the bandwidth allowed by the transmitting filter 409, and this can be solved by using the following six methods:

According to the first method, the channel bandwidth uses a wider frequency band pass filter, and the band cutoff slope of the filter is maintained to be larger. This method makes it possible to use a wider bandwidth while maintaining the same channel bandwidth configuration as in the existing method. According to the second method, the interval between channel bandwidths is slightly increased, and a guard band is additionally configured between channel bandwidths. This method makes it possible to configure an SCW bandwidth without changing the frequency band filter. According to the third method, a different SCW bandwidth is configured for each time symbol. For example, the data channel has an SCW bandwidth configured to be smaller than the channel bandwidth, and the SCW band of the symbol used to transmit an DMRS is configured to be larger than the channel bandwidth. If a DMRS is transmitted in this case, there is little channel estimation performance degradation because, even if the band filter distorts signals on both ends of the SCW band, the DMRS is transmitted through a wideband.

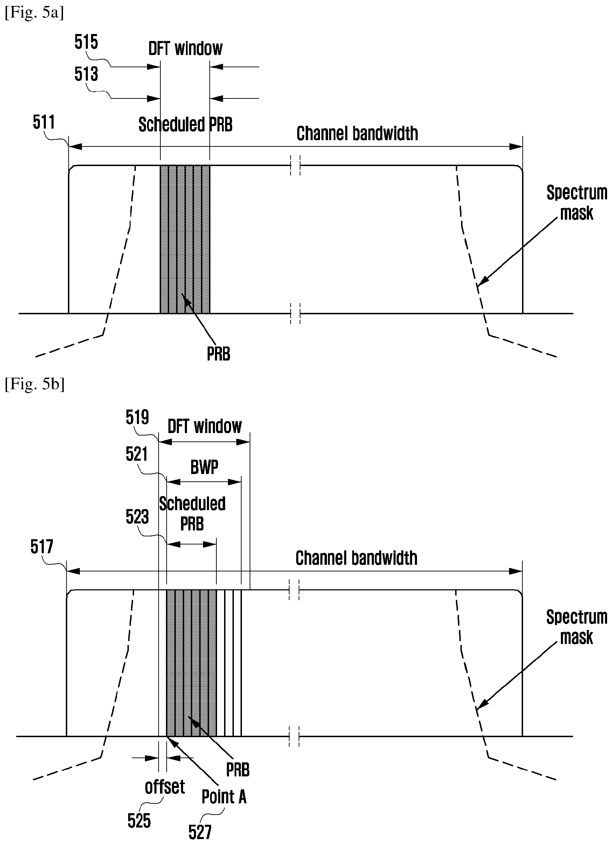

According to the fourth method, the SCW bandwidth is dynamically changed for each symbol. FIG. 5A illustrates a diagram of a fourth method for solving a problem occurring if an SCW uses a bandwidth larger than a bandwidth allowed by a transmitting filter. According to the fourth method, if the bandwidth 513 necessary for the currently transmitted symbol corresponds to a part of the entire channel bandwidth 511 (that is, if a PRB in a partial band is scheduled), the M size 515 is configured with reference to the scheduled PRB, not the channel bandwidth 511.

According to the fifth method, the SCW bandwidth is dynamically changed for each symbol, but is changed only within a limited SCW bandwidth configuration. FIG. 5B is a diagram illustrating a fifth method for solving a problem occurring if an SCW uses a bandwidth larger than a bandwidth allowed by a transmitting filter. According to FIG. 5B, information 521 of one or more SSPs or BWPs is configured for the terminal, and the size of the SCW bandwidth 519 is configured as the smallest value larger than the BWP or SSP size. The SSP or BWP for data transmission may be determined according to information of the PDCCH that schedules the data transmission resource, and the bandwidth of the used SCW size may change according to the SSP or BWP for data transmission.

To this end, the base station needs to indicate the relation between bandwidths occupied by the SSP, BWP, and SCW to the terminal through high-layer signaling by adding the same to SSP or BWP frequency band information. As a method therefor, the base station may transmit at least one piece of information regarding whether the bandwidths of the SCW and the SSP coincide at the starting point or at the ending point, or whether of not an offset 525 (difference value between the stating points of the bandwidths of the SCW and the SSP) occurs, to the base station together with SCW bandwidth information. The offset may be indicated by the number of subcarriers, and this may be implicitly indicated based on the absolute position of the subcarriers (the number within N), or the distance between point A 527 (or point 0 or the lowest index of channel bandwidth or the lowest index of BWP) and the stating point of the SCW, or the definition that point A and the SCW have the same start. As used herein, point A refers to a point serving as a reference to indicate the PRB.

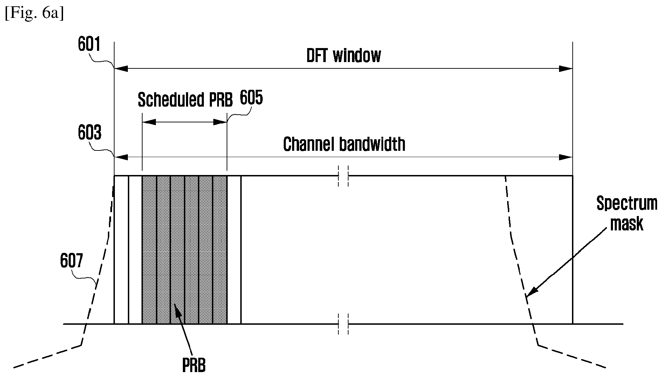

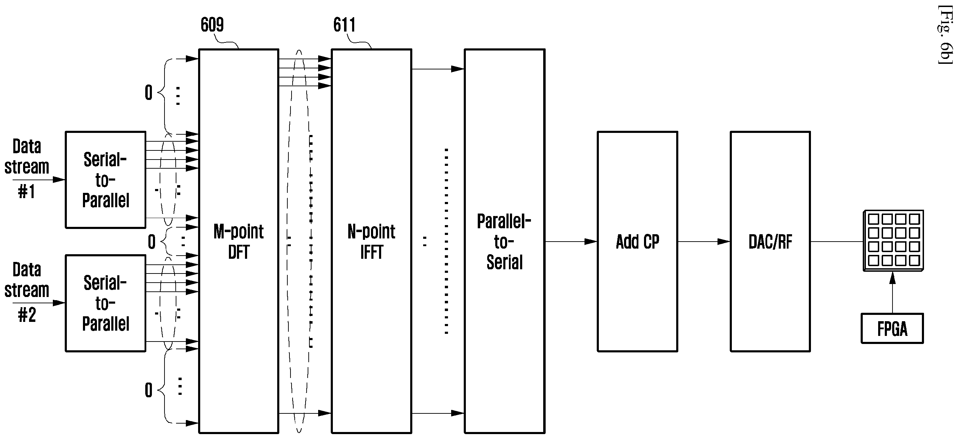

According to the sixth method, N and M are configured to have the same size. FIG. 6A illustrates a diagram of a sixth method for solving a problem occurring if an SCW uses a bandwidth larger than a bandwidth allowed by a transmitting filter. Referring to FIG. 6A, the size of N may be determined by the size of the channel bandwidth or the transmission bandwidth, and M may be configured to have the same size as N. That is, the SCW bandwidth 601 is identical to the channel bandwidth 603, and the existing wideband filter 607 may be used accordingly. In this case, the operation of the M-DFT and N-IFFT have the same effect as up-converting a data vector to a given bandwidth. This proposed method has an advantage in that, since the hardware structure is simple, a device in the existing OFDM modem can be used without modification, and there is no error between the channel bandwidth and the SCW bandwidth. FIG. 6B illustrates a diagram of another exemplary method for performing the sixth method for solving a problem occurring if an SCW uses a bandwidth larger than a bandwidth allowed by a transmitting filter. According to FIG. 6B, such a structure in which the SCW bandwidth and the channel bandwidth are identical may also be confirmed in the N-point DFT 609 and the N-point IFFT 611.

In order to support this, the guard band needs to be configured differently from the existing method. The guard band is configured in the existing system such that, among N divided bandwidths, continuous frequency areas on both ends are not used. However, the proposed method uses all available bands to transmit N subcarriers, and the guard band needs to be separately configured between the channel band and an adjacent channel band. In addition, since the proposed method divides the channel bandwidth used by the base station to N subcarriers, the SCS corresponds to the BW divided into N parts. That is, the SCS may be defined by Equation 1 below, wherein $f(a)$ is a function returning a value which is smaller than or equal to $a$, and which is configured as a product of exponentiations of 2, 3, and 5:

$$[\text{Equation 1}]$$
$$SCS = f(BW/N)$$

For example, if the above-described second method is used, the SCW bandwidth based on a combination of a SCS and a channel bandwidth may be converted to the number of subcarriers as given in Table 9 below:

[Table 9]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 1536 | 1944 | 3240 | 3888 | | | | | | | | |
| 240 | 768 | 972 | 1620 | 1944 | 2592 | 3240 | 3888 | | | | | |
| 480 | | | 768 | 972 | 1296 | 1620 | 1944 | 3240 | 3600 | 3888 | 3888 | |
| 960 | | | | 480 | 648 | 768 | 972 | 1620 | 1800 | 1944 | 2160 | 3240 |

The maximum number of available RBs can be calculated based on Table 9, and the result is given below:

[Table 10]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 128 | 162 | 270 | 324 | | | | | | | | |
| 240 | 64 | 81 | 135 | 162 | 216 | 270 | 324 | | | | | |
| 480 | | | 64 | 81 | 108 | 135 | 162 | 270 | 300 | 324 | 324 | |
| 960 | | | | 40 | 54 | 64 | 81 | 135 | 150 | 162 | 180 | 270 |

Frequency efficiencies calculated based on Table 10 are given in Table 11 below:

[Table 11]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 92.16 | 93.31 | 97.2 | 93.31 | | | | | | | | |
| 240 | 92.16 | 93.31 | 97.2 | 93.31 | 95.70 | 97.2 | 93.31 | | | | | |

(continued)

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 480 | | | 92.16 | 93.31 | 95.70 | 97.2 | 93.31 | 97.2 | 98.7 4 | 93.31 | 85.22 | |
| 960 | | | | 92.16 | 95.70 | 92.1 6 | 93.31 | 97.2 | 98.7 4 | 93.31 | 94.68 | 97.2 |

It is clear from Table 11 above that, compared with Table 8, all frequency efficiencies have improved to 90% or higher.

For example, if the proposed fifth method is used, the number of available subcarriers, based on a combination of a SCS and a channel bandwidth, is given in Table 12 below:

[Table 12]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 1667 | 2083 | 3333 | 4167 | | | | | | | | |
| 240 | 833 | 1042 | 1667 | 2083 | 2708 | 3333 | 4167 | | | | | |
| 480 | | 521 | 833 | 1042 | 1354 | 1667 | 2083 | 3333 | 3646 | 4167 | 4563 | |
| 960 | | 260 | 417 | 521 | 677 | 833 | 1042 | 1667 | 1823 | 2083 | 2281 | 3333 |

Available SCW bandwidths may be converted to SCW bandwidths, which are expressed as products of exponentiations of 2, 3, and 5, based on the number of available subcarriers given in Table 12, and the result is given in Table 13 below:

[Table 13]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 1620 | 2048 | 3240 | 4096 | | | | | | | | |
| 240 | 810 | 1024 | 1620 | 2048 | 2700 | 3240 | 4096 | | | | | |
| 480 | | 512 | 810 | 1024 | 1350 | 1620 | 2048 | 3240 | 3600 | 4096 | | |
| 960 | | 256 | 405 | 512 | 657 | 810 | 1024 | 1620 | 1800 | 2048 | 2250 | 3240 |

Frequency efficiencies calculated based on Table 13 above are given below:

[Table 14]

| SCS( kHz) | 200 | 250 | 400 | 500 | 650 | 800 | 1000 | 1600 | 1750 | 2000 | 2190 | 3200 |
|---|---|---|---|---|---|---|---|---|---|---|---|---|
| 120 | 97.2 | 98.30 | 97.2 | 98.30 | | | | | | | | |
| 240 | 97.2 | 98.30 | 97.2 | 98.30 | 99.69 | 97.2 | 98.3 | | | | | |
| 480 | | 98.30 | 97.2 | 98.30 | 99.69 | 97.2 | 98.3 | 97.2 | 98.7 4 | 98.30 | | |
| 960 | | 98.30 | 97.2 | 98.30 | 99.69 | 97.2 | 98.3 | 97.2 | 98.7 4 | 98.30 | 98.63 | 97.2 |

It can be confirmed from Table 14 that, if the fifth method is used, the frequency efficiencies are improved about to 98%, which corresponds to the existing level of LTE or NR.

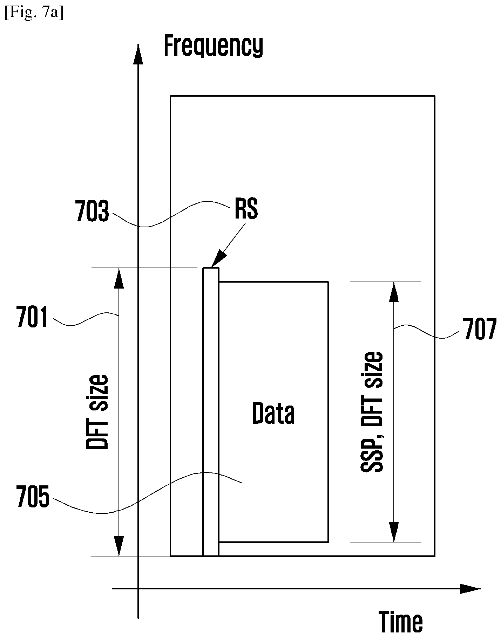

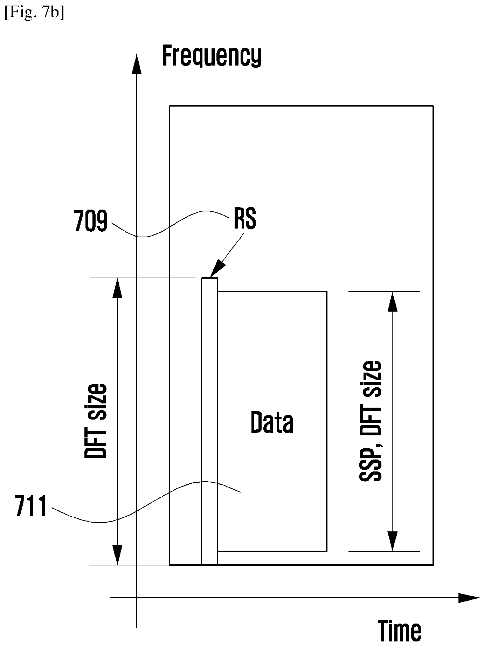

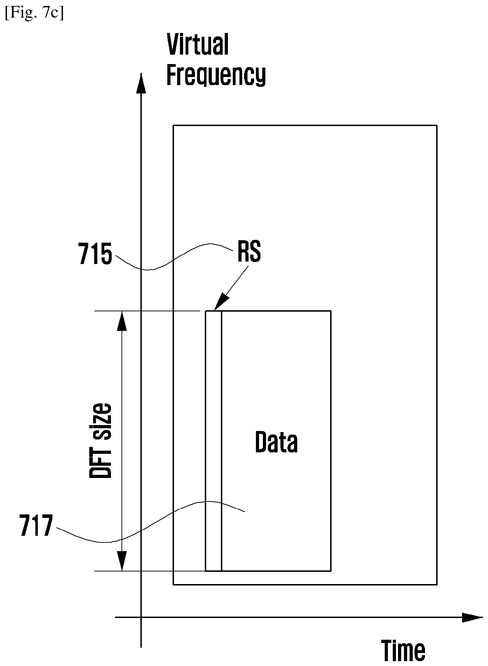

FIG. 7A illustrates a diagram of an exemplary method for transmitting a DMRS and data by using a method proposed in the disclosure, FIG. 7B illustrates a diagram of an exemplary method for transmitting a DMRS and data by using a method proposed in the disclosure, and FIG. 7C illustrates a diagram of an exemplary method for transmitting a DMRS and data by using a method proposed in the disclosure. In order to use the proposed technology to transmit a DMRS and a PDSCH, it is necessary to transmit the DMRS first and then to transmit the PDSCH (time division transmission). A method for transmitting a DMRS and data if there occurs an offset between the SCW bandwidth and the SSP or BWP bandwidth, for example, will now be described.

Referring to FIG. 7A, if the SCW bandwidth 701 (DFT size) is configured to be larger than the bandwidth of the actual data channel or SSP or the bandwidth 707 of the BWP, as in 700, the DMRS 703 is transmitted by determining the length of an RS sequence used for the DMRS through a resource occupied on a virtual frequency axis according to the SCW bandwidth size, and data 705 is assigned to a bandwidth smaller than the bandwidth for transmitting the DMRS. It can be confirmed from a comparison between 701 and 707 that the offsets of the two bandwidths are evenly divided at both ends of the bandwidths. If the offset is arranged at the end of one bandwidth as in 710 in FIG. 7B, frequency bands may be arranged as in 707 and 711.

Arranging offsets at both ends of bandwidths and arranging the same at the start or end of a bandwidth, as described above, may affect the channel estimation performance. If offsets exist on at both ends, the start and end of a DMRS sample may be distorted, thereby degrading the overall channel estimation performance. If an offset is arranged at the end of a bandwidth (that is, if the offset is arranged in a high frequency band such that the SCW bandwidth and the SSP bandwidth have the same starting points), the first DMRS sample is not affected. Accordingly, performance degradation is not severe as long as channel delay spread is small. However, distortion of the last DRMS sample may generate an error in the latter half of the DMRS sample if the channel is actually estimated, and the latter half part of the estimated spread may be arbitrarily removed in this case, so as to reduce the channel estimation error. If the offset is arranged at the start of a bandwidth (that is, if the offset is arranged in a low frequency band such that the SCW bandwidth and the SSP bandwidth have the same ending points), the channel estimation error occurring in the initial part affects the channel estimation of the overall bandwidth. The error range is larger in this case than when channel estimation errors exist at both ends, thereby having the largest influence on performance degradation. Accordingly, if three methods are all possible, the channel estimation performance may be improved further by arranging the offset such that the sample on the last part is distorted (that is, on the side with the higher frequency).

If M=N are configured as in 720 in FIG. 7C, bandwidths may be configured identically as in 725 and 727. However, in the case of N, exponentiations of 2 can only be supported for fast processing, and in the case of M, exponentiations of 2, 3, and 5 are solely possible. This has a problem in that the actual subcarrier spacing differs from those of other examples (because N is changed if M is changed), and the subcarrier spacing needs to be changed dynamically according to the used scheduling bandwidth. This is because an accurate clock is difficult to generate in the case of a millimeter wave, for which a super-high frequency is used, and noise occurs due to inaccurate clock occurrence. A noise removing operation is necessary to prevent noise-induced performance degradation. If the subcarrier spacing is small, the noise removal performance degrades, and a sufficient time to change the subcarrier spacing needs to be secured to maintain modem synchronization. Accordingly, this method may be used in the case of a modem or an operating scenario, which does not require fast processing, may be difficult to use if fast processing is necessary as in the case of URLLC. In order to prevent this problem, the speed may be improved by predetermining an available candidate from subcarrier spacing candidates. Such a group of subcarrier spacing candidates may be delivered through an SIB or system information.

Table 15 below is a description of RRC information elements for supporting the proposed disclosure.

[Table 15]

```
BWP ::= SEQUENCE {
    locationAndBandwidth INTEGER (0..3 7949),
    subcarrierSpacing SubcarrierSpacing,
    SingleCarrier ENUMERATED {true }
    DFTSize INTEGER (0..37949),
    DFToffset INTEGER (0..11),
    },
  }
```

Although the RRC information elements in Table 15 above are described as being included in a BWP information element, at least one of such information elements may be included in a different information element, such as SSP. In Table 15 above, "locationAndBandwidth" refers to the position of the starting point of the BWP and the bandwidth, and "subcarrierSpacing" refers to the subcarrier spacing applied to the BWP. "SingleCarrier" indicates whether or not a single carrier is transmitted in the BWP, "DFTSize" indicates the position of the starting point of the DFT bandwidth and the bandwidth, and "DFToffset" refers to the above-mentioned offset.

The above-mentioned information may be expressed in another method, and the technology proposed in the disclosure is identically applicable to such a case as well. For example, "DFTSize INTEGER (0..37949)" may also be expressed as follows: DFTSize SEQUENCE {n2 INTERGER (0..9), n3 INTERGER (0..9), n5 INTERGER (0..9)}. Through these expressions, the DFT size may be indicated as a product of exponentiations of 2, 3, and 5.

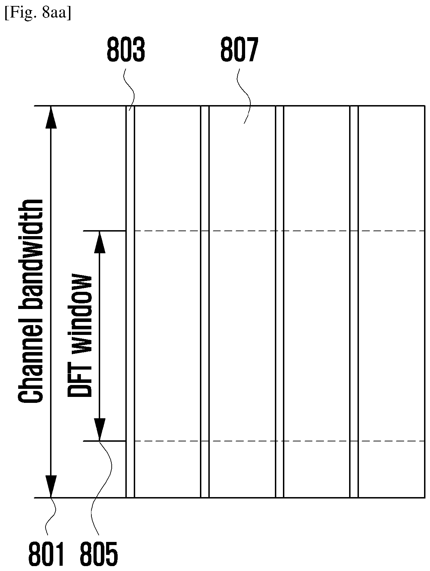

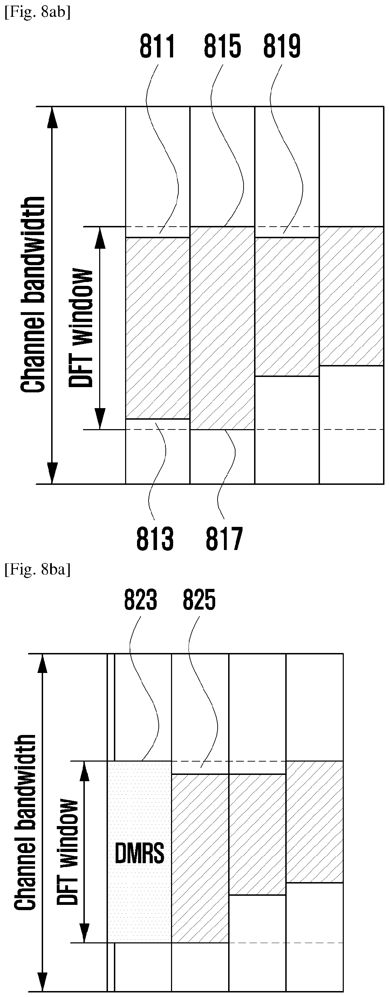

FIG. 8AA illustrates a diagram of an exemplary method for dynamically adjusting a CP when using single-carrier transmission proposed in the disclosure, FIG. 8AB illustrates a diagram of an exemplary method for dynamically adjusting a CP when using single-carrier transmission proposed in the disclosure, FIG. 8BC illustrates a diagram of an exemplary method for dynamically adjusting a CP when using single-carrier transmission proposed in the disclosure, and FIG. 8BD illustrates a diagram of an exemplary method for dynamically adjusting a CP when using single-carrier transmission proposed in the disclosure. Referring to FIG. 8AA, if the downlink bandwidth (or channel bandwidth) operated by the base station is like 801 in the case of 800, the base station selectively uses the frequency to transmit signals to a terminal. This is because the terminal supports a bandwidth smaller than the system bandwidth, or signal transmission using a smaller bandwidth is more efficient to improve the system performance, depending on the scheduling condition. In this case, the base station modulates data transmitted to the terminal, and assigns the same to an assigned bandwidth 805. In order to transmit data through a single carrier, data is transmitted through single-carrier precoding with the same size as the assigned bandwidth.

Since signals are received by the terminal through multiple paths, a CP is added to the signal 807 and then transmitted, as in 803. In FIG. 8AA, the horizontal axis denotes the time resource (symbol), and the vertical axis denotes the frequency resource. As a CP adding method, last N samples of the transmission signal are copied to transmit the signal. Using this method is advantageous in that a continuous transmission signal can be maintained and delivered seamlessly, and the receiver can reconstruct the signal even if the accurate starting point of the reception signal may not be recognized. In spite of this advantage, transmission power and time used for CP transmission are unavailable for data transmission, thereby degrading the system performance, and a degradation of about 8% generally occurs.

However, in the case of a millimeter-wave band, multi-path loss is very severe, and substantially no delay occurs due to the multi-path. In addition, the number of antennas increases in connection with beamforming, which is applied to compensate for path loss, and the beam width substantially decreases. Such a decreases further decreases delay, and substantially no spreading occurs due to the multi-path, or spreading can be predicted based on the beamforming used by the base station. For example, if a wide beam is used through beamforming, path angle spread increases, but a decrease in the transmission signal intensity is predictable. If a narrow beam is used through beamforming, it can be predicted that the angle of the transmission signal path will not spread, and substantially no time spread will occur. If a fixed CP is used in this case as in the existing method, the system performance undergoes a severe loss. A variable CP may be used to prevent such a system performance loss, and a method for supporting a variable CP will be proposed below.

Referring to FIG. 8AB, reference numeral 809 in 810 corresponds to a method for supporting a variable CP through a resource assignment method. The method proposed in the disclosure is for the purpose of securing an additional CP in a symbol having a CP configured through a minimum time spread (not a CP configured with reference to maximum time spread as in the prior art), or securing a CP in a symbol having no CP. A method proposed to this end follows the two following rules. According to the first rule, if a transmitted symbol needs a CP, a continuous RE resource having a low frequency resource index, within a resource assignment area given by a resource assignment method, is used as zero or is maintained. According to the second rule, if an RE resource having the highest frequency resource index within a resource assignment area given in the previous symbol is not used, a continuous RE resource having a low index may be used in the next symbol. If the second rule cannot be followed, the first rule is to be followed. A resource having zero assigned thereto (or empty resource) on the frequency axis is empty on the time axis during SCW transmission, and thus can be used as a guard between symbols, like a CP.

Reference numeral 811 corresponds to a case in which the first rule is followed, and it can be confirmed that the RE resource having a low frequency resource index, which is assigned to the first symbol, is empty. Reference numeral 815 corresponds to a case in which no frequency resource 813 having a high index has been assigned in the previous first symbol, and an RE resource 815 having a low frequency resource index is available in the next second symbol (accordingly, the second rule is followed). In the case of 819, a frequency resource having a high frequency resource index has been used in the previous second symbol, like 817, and the second rule cannot be used accordingly. Instead, a RE resource having a low frequency resource index is emptied according to the first rule. This rule follows a virtual PR-physical RB mapping (VRP-to-PRB mapping) rule, and the rule of VRB may be expressed as in Table 16 below:

[Table 16]

| the corresponding resource elements in the corresponding physical resource blocks are not used for PDSCH according to virtual CP is configured, or the corresponding resource elements in the corresponding physical resource blocks are not used for PDSCH according to zero-power element. |
| --- |

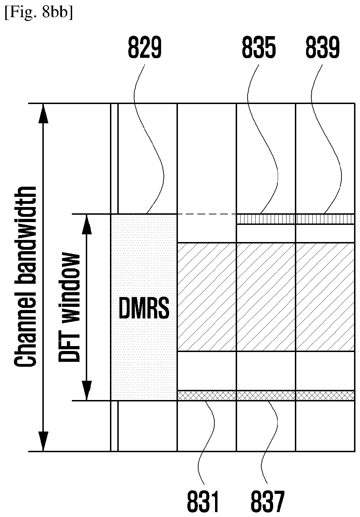

FIG. 8BA illustrates a diagram of another exemplary method for dynamically adjusting the length of a CP, and FIG. 8BB illustrates a diagram of another exemplary method for dynamically adjusting the length of a CP. According to the method corresponding to 820 in FIG. 8BA, a fixed CP is applied to a symbol for transmitting a DMRS, and a variable CP is applied to a symbol for transmitting data. If this method is used, a channel estimation technique based on multiple paths may be applied through the DMRS, and in the case of a data channel, the terminal may use information obtained from the DRMS for channel estimation. To this end, the base station needs to have at least one piece of information given in Table 17 below included in DMRS transmission configuration information within the BWP.

[Table 17]

```
DMRS-DownlinkConfig ::= SEQUENCE {
    dmrs-Type ENUMERATED {type2} OPTIONAL, -- Need S
   dmrs-AdditionalPosition ENUMERATED {pos0, pos1, pos3} OPTIONAL, -
  Need S
    dmrs-CPlength ENUMERATED {len 8, len 16, len 32, len 64}
    maxLength ENUMERATED {len2} OPTIONAL, -- Need S
    scramblingID0 INTEGER (0..65535) OPTIONAL, - Need S
    scramblingID1 INTEGER (0..65535) OPTIONAL, - Need S
   phaseTrackingRS SetupRelease { PTRS-DownlinkConfig } OPTIONAL, -
  Need M
  }
```

wherein "dmrs-Type" is an indicator indicating the type of the transmitted DMRS; "dmrs-AdditionalPosition" is an indicator indicating the position of an additional DMRS; "Dmrs-CPlength" indicates the length of the CP used for DMRS reception; and "len x" indicates that the CP length corresponds to 1/x of the symbol length. If "dmrs-CPlength" is not configured, the CP length is indicated as zero. "maxLength" indicates the maximum symbol number of the DMRS. "scramblingID0" and "1" indicate initialization values of DMRS sequence generation. "phaseTrackingRS" is an indicator indicating a PTRS configuration if PTRS exists.

In addition, for the purpose of PDSCH transmission, the base station needs to have at least one piece of information given in Table 18 below included in PDSCH configuration information:

[Table 18]

```
PDSCH-Config::= SEQUENCE {
    dataScramblingIdentityPDSCH INTEGER (0..1023) OPTIONAL, -- Need S
    dmrs-DownlinkForPDSCH-MappingTypeC       SetupRelease      {      DMRS-
DownlinkConfig } OPTIONAL, -- Need M
    }
```

wherein "dmrs-DownlinkForPDSCH-MappingTypeC" refers to the method for transmitting a DMRS and a PDSCH, to which the proposed variable CP is applied.

According to the method corresponding to 830 in FIG. 8BB, a new DMRS is transmitted so as to support a variable CP. This method is for the purpose of improving the performance of the data symbol at 820 in FIG. 8BA. In the case of the prior art, signal processing is completed before the IFFT unit, and transmission then occurs. Accordingly, signal processing of the DMRS is also completed before the IFFT. In this case, the DMRS is configured to be transmitted in a specific frequency band. However, if a single carrier is used, it is difficult to transmit the DMRS through a part symbol because DMRS signal processing is performed before the DFT processor. Therefore, DMRS transmissions such as 831, 835, 837, and 839 are possible after the IFFT unit. In the case of 830 in FIG. 8BB, the second symbol 831 and the third symbol 835 are continuously transmitted on the time axis, and the terminal may accordingly conduct channel estimation by determining that 831 and 835 are DMRSs.

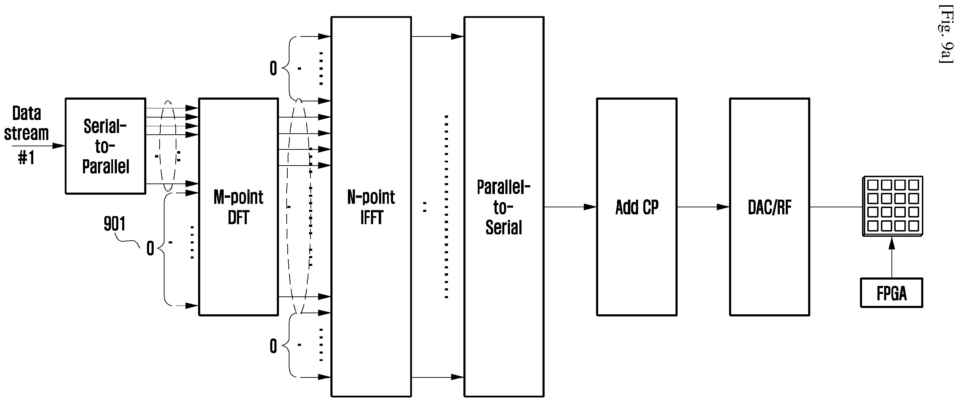

FIG. 9A illustrates a diagram of an example of generating a zero-power sample in connection with single-carrier transmission proposed in the disclosure. Referring to FIG. 9A, in the above-mentioned process of assigning a resource by using a data stream transmitted to a terminal, a method of transmitting a zero-power or null signal in the case of some samples is applied to the transmitting end, as in 901. However, in this case, some modems may undergo abnormal power signal generation, and the following four methods are proposed to prevent this.

FIG. 9BA illustrates a diagram of a method for preventing generation of a zero-power sample in connection with single-carrier transmission proposed in the disclosure, FIG. 9BB illustrates a diagram of a method for preventing generation of a zero-power sample in connection with single-carrier transmission proposed in the disclosure, FIG. 9BC illustrates a diagram of a method for preventing generation of a zero-power sample in connection with single-carrier transmission proposed in the disclosure, and FIG. 9BD illustrates a diagram of a method for preventing generation of a zero-power sample in connection with single-carrier transmission proposed in the disclosure. The first method 910 illustrated in FIG. 9BA uses a zero-power sample for retransmission. That is, a data stream transmitted to the terminal is repeatedly input to the DFT processor, thereby transmitting signals, such that the zero-power sample does not occur. Such repetition may be conducted by a repeating or virtual copying unit 903. The first method is also referred to as a method for performing retransmission inside a symbol. The method for retransmission inside a symbol means that, if the length of a data channel transmitted regardless of a data reception confirmation response (ACK or NACK) from the receiver is smaller than the symbol, data is repeated and retransmitted according to the length of the corresponding symbol. The terminal may obtain channel coding gain through the retransmitted symbol, through symbol reception.

According to the second method 920 illustrated in FIG. 9BB, an additional RS is transmitted. If the length of a transmission data stream is insufficient compared with the bandwidth, an additional RS may be transmitted without transmitting additional data (907). The RS transmitted in this case may be for purpose of predicting phase noise and compensating for the same, instead of channel estimation. If a millimeter-wave band is used, severe noise occurs in the terminal's element and in the terminal device, and an RS is necessary for alleviating the same. In addition, the corresponding resource is used to transmit the RS, in order to prevent the zero-power sample.

According to the third method 930 illustrated in FIG. 9BC, time spreading is applied to a data stream to be transmitted. Single-carrier transmission is identical to frequency spreading, in terms of the effect. If the length of a data symbol vector for data transmission is smaller than the number of actually transmittable symbols, additional spreading may be applied to the data symbol such that time-axis spreading occurs. In this case, the data symbol is transmitted through frequency spreading through single-carrier transmission, and additional time band spreading, thereby increasing the reliability and the coverage. According to the fourth method 940 illustrated in FIG. 9BD, a symbol filter is used. The symbol filter refers to a pulse-shaping filter applied after a data signal is generated, and is used to convert a digital signal to an analog signal. If a signal passes through a filter, the length thereof increases in proportion to the number of taps of the filter. This makes it possible to design a zero-power sample so as to generate a filter output close to zero, although not exactly zero. To put in another manner, the number of zero-power samples may be reduced by increasing the number of taps of the filter such that the zero-tail increases.

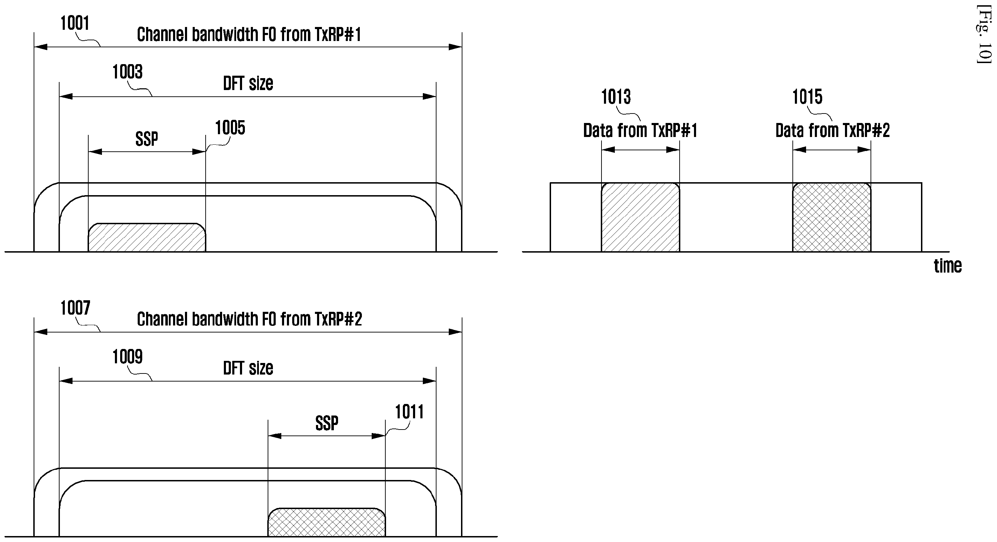

FIG. 10 illustrates a diagram of an exemplary method wherein one or more base stations using single-carrier transmission proposed in the disclosure supports a single terminal by using a continuous virtual resource.

Referring to FIG. 10, for the purpose of the method proposed below, each base station (or transmission and reception unit (TxRP or TRP)) does not necessarily have the same channel bandwidth used for the corresponding bandwidth, but needs to have the same position as that of the bandwidth of the single carrier. Such bandwidth information needs to be agreed and/or exchanged in advance between the base stations. The channel bandwidth used by RxRP 1 is 1001, and the bandwidth of the single carrier (or DFT size) is 1003. In addition, the channel bandwidth used by TxRP 2 is 1007, and the bandwidth of the single carrier is 1009. In this case, 1001 and 1007 are not necessarily identical, but the positions and bandwidths of 1003 and 1009 need to be identical.

In addition, one or more base stations or TxRPs using the bandwidth of the same single carrier need to user continuous resources that do not overlap each other within the single carrier band, and such resource information needs to be agreed and/or exchanged in advance. If TxRP 1 uses a resource such as 1005 as the SPS, if TxRP 2 uses a resource such as 1011 as the SSP, and if resources used by respective base stations in the above example do not overlap, one or more base stations may transmit different data channels to one terminal, and the terminal may receive data channels transmitted from two different TxRPs at different timepoints on the time axis, such as 1013 (corresponding to data transmitted from TxRP 1) and 1015 (corresponding to data transmitted form TxRP 2), within one symbol. That is, data transmitted by different base stations may under TDM within the symbol.

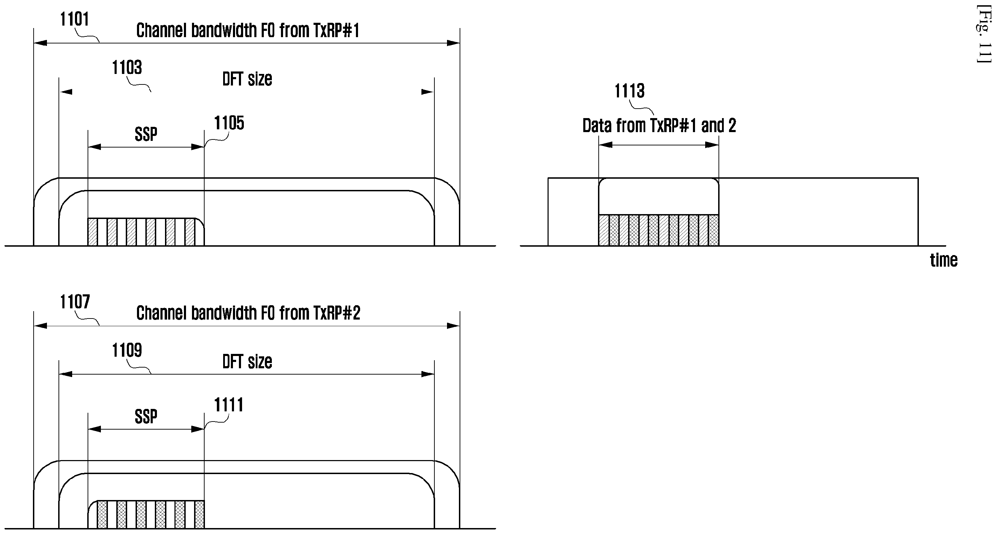

FIG. 11 illustrates a diagram of an exemplary method wherein one or more base stations using single-carrier transmission proposed in the disclosure supports a single terminal by using a discontinuous virtual resource.

Referring to FIG. 11, for the purpose of the method proposed below, each base station (or transmission and reception unit (TxRP or TRP)) does not necessarily have the same channel bandwidth used for the corresponding bandwidth, but needs to have the same position as that of the bandwidth of the single carrier. Such bandwidth information needs to be agreed and/or exchanged in advance between the base stations. The channel bandwidth used by TxRP 1 is 1101, and the bandwidth of the single carrier (or DFT size) is 1103. In addition, the channel bandwidth used by TxRP 2 is 1107, and the bandwidth of the single carrier is 1109. In this case, 1101 and 1107 are not necessarily identical, but the positions and bandwidths of 1103 and 1109 need to be identical.

In addition, one or more base stations or TxRPs using the bandwidth of the same single carrier need to user discontinuous resources that do not overlap each other within the single carrier band, and such resource information needs to be agreed and/or exchanged in advance by respective base stations. If TxRP 1 uses a resource such as 1105 as the SSP, if TxRP 2 uses a resource such as 1111 as the SSP, and if resources used by respective base stations thus do not overlap, one or more base stations may transmit different data channels to one terminal, and the terminal may simultaneously receive data channels from two different TxRPs at different timepoints on the time axis, as in the case of 1113, within one symbol.

To this end, in order to exchange information for using discontinuous resources between base stations, at least one piece of information given in Table 19 below may be exchanged between the base stations:

[Table 19]

```
interleaverSize ENUMERATED {n6, n12, n24},
   shiftIndex INTEGER(0..maxNrofVirtualResourceBlocks-1) OPTIONAL
   },
   nonInterleaved NULL
   transmissionComb CHOICE {
   SEQUENCE {
   combOffset INTEGER (0..maxNrofCombOffset),
   cyclicShift INTEGER (0.. maxNrofCombCS)
   },
```

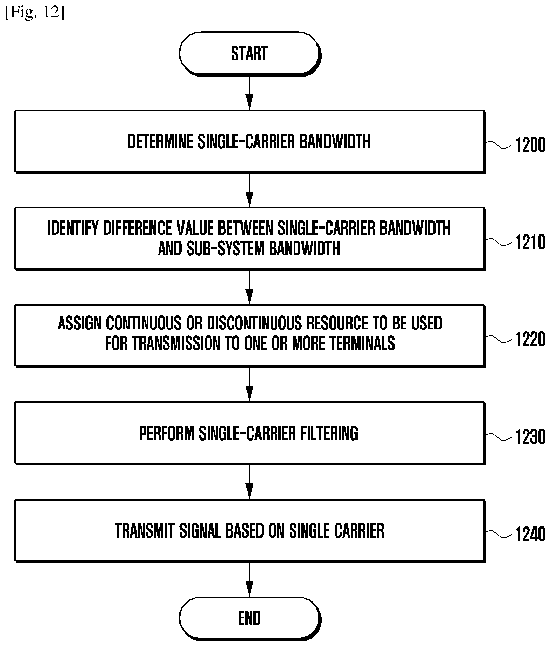

FIG. 12 illustrates a diagram of operations of a base station transmitting a data channel according to the disclosure. Referring to FIG. 12, in step 1200, the base station determines the bandwidth of a single carrier according to the size of a system bandwidth and that a configured sub-system bandwidth. The system bandwidth may correspond to a channel bandwidth, and the sub-system bandwidth may correspond to a resource that can be assigned to a terminal. That is, the sub-system bandwidth may correspond to a BWP or SSP, and may correspond to a resource that can be assigned for multiple terminals. The bandwidth of the single carrier may correspond to a DFT size, and this may be determined by the above-mentioned method. In step 1210, the base station confirms the difference between the bandwidth of the single carrier and the system bandwidth or the configured sub-system bandwidth. In step 1220, the base station assigns a continuous or discontinuous time resource to multiple terminals before single-carrier filtering (which may be interpreted as SC precoding, single carrier conversion, or DFT precoding). A resource assigned to one terminal may be continuous or discontinuous. In step 1230, the terminal performs single-carrier filtering so as to convert the data signal of multiple terminals by the single carrier, performs IFFT, analog signal conversion, and the like, and transmits the data signal to the multiple terminals (step 1240). Not all steps of the operations in FIG. 12 are necessarily performed, and may also be performed in a changed order.

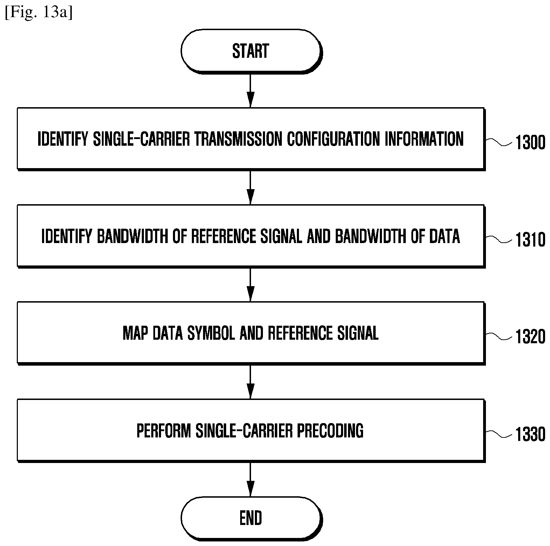

FIG. 13A illustrates a diagram of a base station transmitting data by using a single carrier. In step 1300, the base station confirms single-carrier transmission configuration information in order to perform single-carrier transmission through a transceiver supporting orthogonal frequency division multiplexing (FDM) transmission. Such configuration information may include a time-frequency resource to which single-carrier transmission is applicable, a set of available DFT sizes, and the like. In addition, such information may be transmitted to a terminal through high-layer signaling such as system information. In step 1310, the base station determines the bandwidth of a reference signal transmitted through the bandwidth of the single carrier and the size of the bandwidth of the data channel, and performs data mapping with the reference signal. In addition, in step 1310, the base station may confirm the position and size of a symbol through which a CP is transmitted. The base station may map a data symbol to a time symbol through which no CP is transmitted, and then transmit the same. The base station may map a reference signal to a symbol through which a CP is transmitted, and then transmit the same. Alternatively, the CP may be assigned to each symbol as described in the disclosure. Such CP configuration-related information may be transmitted through high-layer signaling such as system information. Such CP related operations may be omitted.

In step 1320, the base station may generate a signal to be transmitted to a time sample that generates no transmission power (zero-power sample). This step may be omitted, and the base station generates and maps a sample to replace the zero-power sample in the above-mentioned method. In step 1330, the base station performs single-carrier precoding with regard to the mapped data and the reference signal, performs IFFT, analog signal conversion, and the like, and transmits a signal to the terminal.

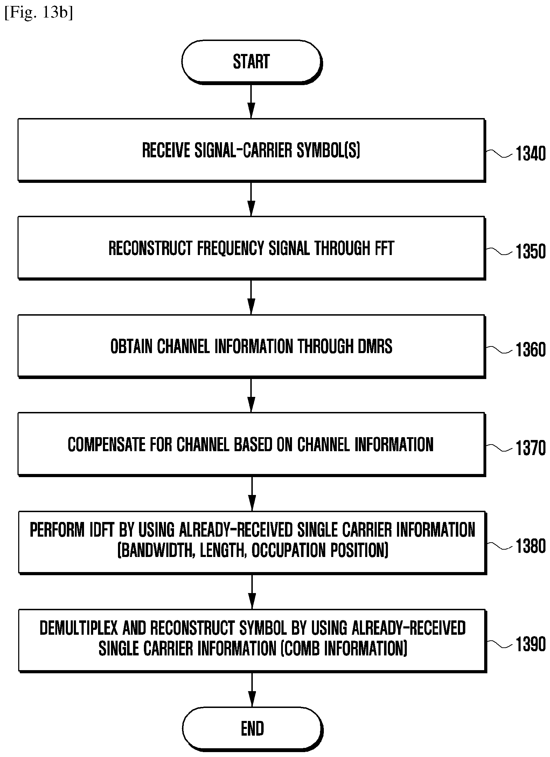

FIG. 13B illustrates a diagram of a terminal receiving signals by using a single carrier. In step 1340, the terminal receives a symbol(s) transmitted by the base station through a transceiver supporting orthogonal frequency division multiplexing (OFDM) transmission. The received signal is converted to a frequency signal through FFT in step 1350. In step 1360, the terminal reconstructs the channel by using the received DMRS. In step 1370, the terminal compensates for the channel for each subcarrier by using the reconstructed channel information. In step 1380, the terminal performs an IDFT operation by using an already-received single carrier information (frequency position, DFT length). In strep 1390, the terminal demultiplexes the data symbol by using already-received resource assignment information, stores the same, reconstructs the same, thereby acquiring the signal transmitted by the base station.

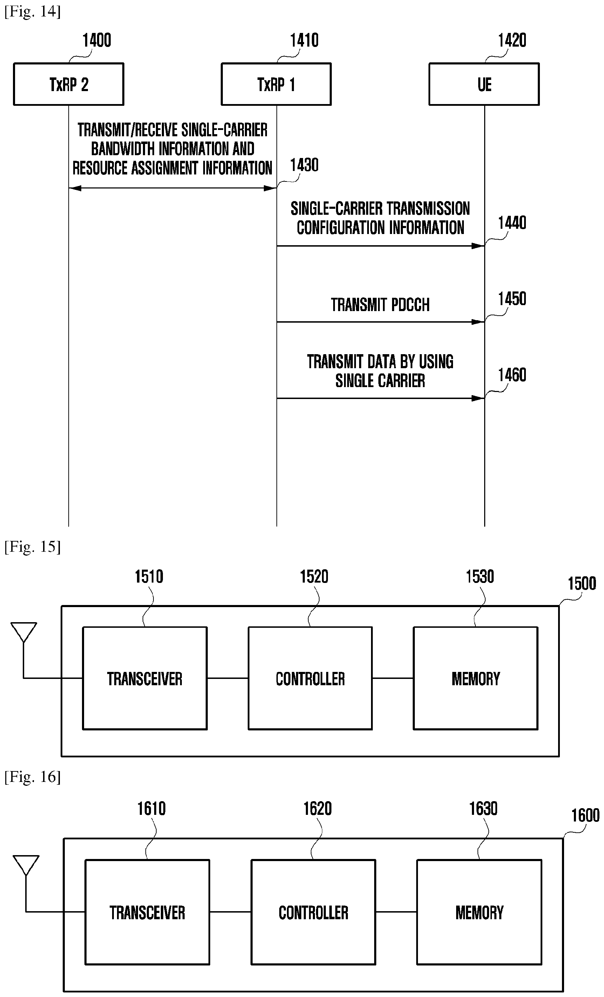

FIG. 14 illustrates a diagram of operations of at least one base station supporting a single terminal by using the same single-carrier bandwidth. According to FIG. 14, TxRP 1 1410 and TxRP 2 1420 are base stations capable of supporting transmission to one terminal by using the same single-carrier bandwidth. TxRP 1 1410 and TxRP 2 1420 may exchange information regarding a bandwidth and information regarding resources that respective base stations will assign to transmit data within the single-carrier band (step 1430). Through this process, respective base stations may determine the same single-carrier band to use, and may assign resources for data transmission so as not to overlap. In step 1440, TxRP 1 1410 transmits single-carrier transmission configuration information to the terminal 1420. The single-carrier transmission configuration information may include at least one of the above-mentioned RRC IEs. Then, TxRP 2 1420 may transmit a PDCCH that indicates a resource to transmit data to the terminal 1420. Then, TxRP 2 1410 may transmit a PDSCH (or data channel) to the terminal 1420 by using the resource. In this case, data transmitted by TxRP 2 1410 and data transmitted by TxRP 1 1410 may be transmitted in respective SSPs within the symbol on the time axis. The terminal 1420 may receive data transmitted by respective base stations at different timepoints on the time axis.

FIG. 15 illustrates a diagram of a base station device according to the disclosure. The base station device 1500 may include a transceiver 1510, a controller 1520, and a memory 1530. The transceiver 1510 may exchange signals with a terminal. The signals may include control information, a reference signal, and data. To this end, the transceiver 1510 may include an RF transmitter configured to up-convert and amplify the frequency of a transmitted signal, an RF receiver configured to low-noise-amplify a received signal and to down-convert the frequency thereof, and the like. In addition, the transceiver may receive a signal through a radio channel, may output the same to the controller 1510, and may transmit a signal output from the controller 1510 through the radio channel. The controller 1510 may control a series of processes such that the base station can operate according to an embodiment.

FIG. 16 illustrates a diagram of a terminal device according to the disclosure. The terminal device 1600 may include a transceiver 1610, a controller 1620, and a memory 1630. The transceiver 1610 may exchange signals with a terminal. The signals may include control information, a reference signal, and data. To this end, the transceiver 1610 may include an RF transmitter configured to up-convert and amplify the frequency of a transmitted signal, an RF receiver configured to low-noise-amplify a received signal and to down-convert the frequency thereof, and the like. In addition, the transceiver may receive a signal through a radio channel, may output the same to the controller 1610, and may transmit a signal output from the controller 1610 through the radio channel. The controller 1610 may control a series of processes such that the terminal can operate according to embodiments described above.

The scope of protection of the invention is limited by the appended claims.

**Claims**

1. A method performed by a base station in a wireless communication system, the method comprising:

   identifying configuration information for the single carrier-based signal transmission;
   transmitting, to two or more terminals, the configuration information; and
   transmitting, to the two or more terminals, a downlink signal on a symbol for a single carrier waveform according to the configuration information,
   wherein the symbol for the single carrier waveform is divided into two or more sub-symbol parts and the two or more sub-symbol parts are associated with the two or more terminals, respectively, and
   wherein the configuration information includes information regarding resources to which the single carrier-based signal transmission is applied.

2. The method of claim 1, wherein the information regarding the resources to which the single carrier-based signal transmission is applied includes information regarding continuous frequency resource assignment or information regarding discontinuous frequency resource assignment.

3. The method of claim 2, wherein the information regarding the discontinuous frequency resource assignment is based on interleaving or comb-type resource assignment.

4. The method of claim 1, wherein the identifying of the configuration information for the single carrier-based signal transmission further comprises identifying a bandwidth for the single carrier waveform, and
   wherein the bandwidth for the single carrier waveform is larger than a bandwidth of a maximum number of resource blocks determined based on a channel bandwidth and a subcarrier spacing.

5. A method performed by a terminal in a wireless communication system, the method comprising:

   receiving, from a base station, configuration information for single carrier-based signal transmission; and
   receiving, from the base station, a downlink signal transmitted on a symbol for a single carrier waveform according to the configuration information,

wherein the downlink signal is transmitted on the symbol for the single carrier waveform to two or more terminals including the terminal,

wherein the symbol for the single carrier waveform is divided into two or more sub-symbol parts and the two or more sub-symbol parts are associated with the two or more terminals, respectively, and

wherein the configuration information includes information regarding resources to which the single carrier-based signal transmission is applied.

6. The method of claim 5, wherein the information regarding the resources to which the single carrier-based signal transmission is applied includes information regarding continuous frequency resource assignment or information regarding discontinuous frequency resource assignment.

7. The method of claim 6, wherein the information regarding the discontinuous frequency resource assignment is based on interleaving or comb-type resource assignment.

8. The method of claim 5, wherein a bandwidth for the single carrier waveform is larger than a bandwidth of a maximum number of resource blocks determined based on a channel bandwidth and a subcarrier spacing.

9. A base station for a wireless communication system, the base station comprising:

a transceiver; and
a controller configured to:

identify configuration information for the single carrier-based signal transmission,
transmit, to two or more terminals via the transceiver, the configuration information, and
transmit, to the two or more terminals via the transceiver, a downlink signal on a symbol for a single carrier waveform according to the configuration information,

wherein the symbol for the single carrier waveform is divided into two or more sub-symbol parts and the two or more sub-symbol parts are associated with the two or more terminals, respectively, and
wherein the configuration information includes information regarding resources to which the single carrier-based signal transmission is applied.

10. The base station of claim 9, wherein the information regarding the resources to which the single carrier-based signal transmission is applied includes information regarding continuous frequency resource assignment or information regarding discontinuous frequency resource assignment.

11. The base station of claim 10, wherein the information regarding the discontinuous frequency resource assignment is based on interleaving or comb-type resource assignment.

12. The base station of claim 9, wherein the controller is further configured to identify a bandwidth for the single carrier waveform, and
wherein the bandwidth for the single carrier waveform is larger than a bandwidth of a maximum number of resource blocks determined based on a channel bandwidth and a subcarrier spacing.

13. A terminal for a wireless communication system, the terminal comprising:

a transceiver; and
a controller configured to:

receive, from a base station via the transceiver, configuration information for single carrier-based signal transmission, and
receive, from the base station via the transceiver, a downlink signal transmitted on a symbol for a single carrier waveform according to the configuration information,

wherein the downlink signal is transmitted on the symbol for the single carrier waveform to two or more terminals including the terminal,
wherein the symbol for the single carrier waveform is divided into two or more sub-symbol parts and the two or more sub-symbol parts are associated with the two or more terminals, respectively, and

wherein the configuration information includes information regarding resources to which the single carrier-based signal transmission is applied.

14. The terminal of claim 13, wherein the information regarding the resources to which the single carrier-based signal transmission is applied includes information regarding continuous frequency resource assignment or information regarding discontinuous frequency resource assignment, and
wherein the information regarding the discontinuous frequency resource assignment is based on interleaving or comb-type resource assignment.

15. The terminal of claim 13, wherein a bandwidth for the single carrier waveform is larger than a bandwidth of a maximum number of resource blocks determined based on a channel bandwidth and a subcarrier spacing.

**Patentansprüche**

1. Verfahren, das von einer Basisstation in einem drahtlosen Kommunikationssystem ausgeführt wird, wobei das Verfahren Folgendes umfasst:

Identifizieren von Konfigurationsinformationen für die einzelträgerbasierte Signalübertragung;
Übertragen der Konfigurationsinformationen an zwei oder mehr Endgeräte; und
Übertragen eines Downlink-Signals auf einem Symbol für eine Einzelträger-Wellenform gemäß den Konfigurationsinformationen an die zwei oder mehr Endgeräte,
wobei das Symbol für die Einzelträger-Wellenform in zwei oder mehr Untersymbolteile unterteilt ist und die zwei oder mehr Untersymbolteile jeweils mit den zwei oder mehr Endgeräten assoziiert sind, und
wobei die Konfigurationsinformationen Informationen in Bezug auf Ressourcen enthalten, auf die die einzelträgerbasierte Signalübertragung angewendet wird.

2. Verfahren nach Anspruch 1, wobei die Informationen in Bezug auf die Ressourcen, auf die die einzelträgerbasierte Signalübertragung angewendet wird, Informationen in Bezug auf eine kontinuierliche Frequenzressourcenzuweisung oder Informationen in Bezug auf eine diskontinuierliche Frequenzressourcenzuweisung enthalten.

3. Verfahren nach Anspruch 2, wobei die Informationen in Bezug auf die diskontinuierliche Frequenzressourcenzuweisung auf einer Verschachtelungs- oder kammartigen Ressourcenzuweisung basieren.

4. Verfahren nach Anspruch 1, wobei das Identifizieren der Konfigurationsinformationen für die einzelträgerbasierte Signalübertragung ferner das Identifizieren einer Bandbreite für die Einzelträger-Wellenform umfasst, und
wobei die Bandbreite für die Einzelträger-Wellenform größer als eine Bandbreite einer maximalen Anzahl von Ressourcenblöcken ist, die basierend auf einer Kanalbandbreite und einem Unterträgerabstand bestimmt wird.

5. Verfahren, das von einem Endgerät in einem drahtlosen Kommunikationssystem ausgeführt wird, wobei das Verfahren Folgendes umfasst:

Empfangen von Konfigurationsinformationen für die einzelträgerbasierte Signalübertragung von einer Basisstation; und
Empfangen eines Downlink-Signals, das auf einem Symbol für eine Einzelträger-Wellenform gemäß den Konfigurationsinformationen übertragen wird, von der Basisstation,
wobei das Downlink-Signal auf dem Symbol für die Einzelträger-Wellenform an zwei oder mehr Endgeräte einschließlich des Endgeräts übertragen wird,
wobei das Symbol für die Einzelträger-Wellenform in zwei oder mehr Untersymbolteile unterteilt ist und die zwei oder mehr Untersymbolteile jeweils mit den zwei oder mehr Endgeräten assoziiert sind, und
wobei die Konfigurationsinformationen Informationen in Bezug auf Ressourcen enthalten, auf die die einzelträgerbasierte Signalübertragung angewendet wird.

6. Verfahren nach Anspruch 5, wobei die Informationen in Bezug auf die Ressourcen, auf die die einzelträgerbasierte Signalübertragung angewendet wird, Informationen in Bezug auf eine kontinuierliche Frequenzressourcenzuweisung oder Informationen in Bezug auf eine diskontinuierliche Frequenzressourcenzuweisung enthalten.

7. Verfahren nach Anspruch 6, wobei die Informationen in Bezug auf die diskontinuierliche Frequenzressourcenzuweisung auf einer Verschachtelungs- oder kammartigen Ressourcenzuweisung basieren.

8. Verfahren nach Anspruch 5, wobei eine Bandbreite für die Einzelträger-Wellenform größer als eine Bandbreite einer maximalen Anzahl von Ressourcenblöcken ist, die basierend auf einer Kanalbandbreite und einem Unterträgerabstand bestimmt wird.

9. Basisstation für ein drahtloses Kommunikationssystem, wobei die Basisstation Folgendes umfasst:

einen Transceiver; und
eine Steuerung, die zu Folgendem konfiguriert ist:

Identifizieren von Konfigurationsinformationen für die einzelträgerbasierte Signalübertragung,
Übertragen der Konfigurationsinformationen über den Transceiver an zwei oder mehr Endgeräte, und
Übertragen eines Downlink-Signals auf einem Symbol für eine Einzelträger-Wellenform gemäß den Konfigurationsinformationen über den Transceiver an die zwei oder mehr Endgeräte,

wobei das Symbol für die Einzelträger-Wellenform in zwei oder mehr Untersymbolteile unterteilt ist und die zwei oder mehr Untersymbolteile jeweils mit den zwei oder mehr Endgeräten assoziiert sind, und
wobei die Konfigurationsinformationen Informationen in Bezug auf Ressourcen enthalten, auf die die einzelträgerbasierte Signalübertragung angewendet wird.

10. Basisstation nach Anspruch 9, wobei die Informationen in Bezug auf die Ressourcen, auf die die einzelträgerbasierte Signalübertragung angewendet wird, Informationen in Bezug auf eine kontinuierliche Frequenzressourcenzuweisung oder Informationen in Bezug auf eine diskontinuierliche Frequenzressourcenzuweisung enthalten.

11. Basisstation nach Anspruch 10, wobei die Informationen in Bezug auf die diskontinuierliche Frequenzressourcenzuweisung auf einer Verschachtelungs- oder kammartigen Ressourcenzuweisung basieren.

12. Basisstation nach Anspruch 9, wobei die Steuerung ferner so konfiguriert ist, dass sie eine Bandbreite für die Einzelträger-Wellenform identifiziert, und
wobei die Bandbreite für die Einzelträger-Wellenform größer als eine Bandbreite einer maximalen Anzahl von Ressourcenblöcken ist, die basierend auf einer Kanalbandbreite und einem Unterträgerabstand bestimmt wird.

13. Endgerät für ein drahtloses Kommunikationssystem, wobei das Endgerät Folgendes umfasst:

einen Transceiver; und
eine Steuerung, die zu Folgendem konfiguriert ist:

Empfangen von Konfigurationsinformationen für die einzelträgerbasierte Signalübertragung über den Transceiver von einer Basisstation, und
Empfangen eines Downlink-Signals, das auf einem Symbol für eine Einzelträger-Wellenform gemäß den Konfigurationsinformationen übertragen wird, über den Transceiver von der Basisstation,

wobei das Downlink-Signal auf dem Symbol für die Einzelträger-Wellenform an zwei oder mehr Endgeräte einschließlich des Endgeräts übertragen wird,
wobei das Symbol für die Einzelträger-Wellenform in zwei oder mehr Untersymbolteile unterteilt ist und die zwei oder mehr Untersymbolteile jeweils mit den zwei oder mehr Endgeräten assoziiert sind, und
wobei die Konfigurationsinformationen Informationen in Bezug auf Ressourcen enthalten, auf die die einzelträgerbasierte Signalübertragung angewendet wird.

14. Endgerät nach Anspruch 13, wobei die Informationen in Bezug auf die Ressourcen, auf die die einzelträgerbasierte Signalübertragung angewendet wird, Informationen in Bezug auf eine kontinuierliche Frequenzressourcenzuweisung oder Informationen in Bezug auf eine diskontinuierliche Frequenzressourcenzuweisung enthalten, und
wobei die Informationen in Bezug auf die diskontinuierliche Frequenzressourcenzuweisung auf einer Verschachtelungs- oder kammartigen Ressourcenzuweisung basieren.

15. Endgerät nach Anspruch 13, wobei eine Bandbreite für die Einzelträger-Wellenform größer als eine Bandbreite einer maximalen Anzahl von Ressourcenblöcken ist, die basierend auf einer Kanalbandbreite und einem Unterträgerabstand bestimmt wird.

**Revendications**

1. Procédé effectué par une station de base dans un système de communication sans fil, le procédé comprenant :

identifier des informations de configuration pour la transmission de signal basée sur une porteuse unique ;
transmettre, à deux ou plusieurs terminaux, des informations de configuration ; et
transmettre, aux deux ou plusieurs terminaux, un signal de liaison descendante sur un symbole pour une forme d'onde à porteuse unique selon les informations de configuration,

où le symbole pour la forme d'onde à porteuse unique est divisé en deux ou plusieurs parties de sous-symbole et les deux ou plusieurs parties de sous-symbole sont associées aux deux ou plusieurs terminaux, respectivement, et
où les informations de configuration incluent des informations concernant les ressources auxquelles la transmission de signal basée sur une porteuse unique est appliquée.

2. Procédé selon la revendication 1, où les informations concernant les ressources auxquelles la transmission de signal basée sur une porteuse unique est appliquée incluent des informations concernant l'attribution de ressources de fréquence continue ou des informations concernant l'attribution de ressources de fréquence discontinue.

3. Procédé selon la revendication 2, où les informations concernant l'attribution de ressources de fréquence discontinue sont basées sur l'entrelacement ou une attribution de ressources de type peigne.

4. Procédé selon la revendication 1, où l'identification des informations de configuration pour la transmission de signal basée sur une porteuse unique comprend en outre l'identification d'une bande passante pour la forme d'onde à porteuse unique, et
où la bande passante pour la forme d'onde à porteuse unique est supérieure à une bande passante d'un nombre maximal de blocs de ressources déterminé sur la base d'une bande passante de canal et d'un espacement de sous-porteuses.

5. Procédé effectué par un terminal dans un système de communication sans fil, le procédé comprenant :

recevoir, depuis une station de base, des informations de configuration pour une transmission de signal basée sur une porteuse unique ; et
recevoir, depuis la station de base, un signal de liaison descendante transmis sur un symbole pour une forme d'onde à porteuse unique selon les informations de configuration,

où le signal de liaison descendante est transmis sur le symbole pour la forme d'onde à porteuse unique à deux ou plusieurs terminaux incluant le terminal,
où le symbole pour la forme d'onde à porteuse unique est divisé en deux ou plusieurs parties de sous-symbole et les deux ou plusieurs parties de sous-symbole sont associées aux deux ou plusieurs terminaux, respectivement, et
où les informations de configuration incluent des informations concernant les ressources auxquelles la transmission de signal basée sur une porteuse unique est appliquée.

6. Procédé selon la revendication 5, où les informations concernant les ressources auxquelles la transmission de signal basée sur une porteuse unique est appliquée incluent des informations concernant l'attribution de ressources de fréquence continue ou des informations concernant l'attribution de ressources de fréquence discontinue.

7. Procédé selon la revendication 6, où les informations concernant l'attribution de ressources de fréquence discontinue sont basées sur l'entrelacement ou une attribution de ressources de type peigne.

8. Procédé selon la revendication 5, où une bande passante pour la forme d'onde à porteuse unique est supérieure à une bande passante d'un nombre maximal de blocs de ressources déterminé sur la base d'une bande passante de canal et d'un espacement de sous-porteuses.

**9.** Station de base pour un système de communication sans fil, la station de base comprenant :

un émetteur-récepteur ; et
un contrôleur configuré pour :

identifier des informations de configuration pour la transmission de signal basée sur une porteuse unique, transmettre, à deux ou plusieurs terminaux via l'émetteur-récepteur, les informations de configuration, et transmettre, aux deux ou plusieurs terminaux via l'émetteur-récepteur, un signal de liaison descendante sur un symbole pour une forme d'onde à porteuse unique selon les informations de configuration,

où le symbole pour la forme d'onde à porteuse unique est divisé en deux ou plusieurs parties de sous-symbole et les deux ou plusieurs parties de sous-symbole sont associées aux deux ou plusieurs terminaux, respectivement, et
où les informations de configuration incluent des informations concernant les ressources auxquelles la transmission de signal basée sur une porteuse unique est appliquée.

**10.** Station de base selon la revendication 9, où les informations concernant les ressources auxquelles la transmission de signal basée sur une porteuse unique est appliquée incluent des informations concernant l'attribution de ressources de fréquence continue ou des informations concernant l'attribution de ressources de fréquence discontinue.

**11.** Station de base selon la revendication 10, où les informations concernant l'attribution de ressources de fréquence discontinue sont basées sur l'entrelacement ou une attribution de ressources de type peigne.

**12.** Station de base selon la revendication 9, où le contrôleur est en outre configuré pour identifier une bande passante pour la forme d'onde à porteuse unique, et
où la bande passante pour la forme d'onde à porteuse unique est supérieure à une bande passante d'un nombre maximal de blocs de ressources déterminé sur la base d'une bande passante de canal et d'un espacement de sous-porteuses.

**13.** Terminal pour un système de communication sans fil, le terminal comprenant :

un émetteur-récepteur ; et
un contrôleur configuré pour :

recevoir, depuis une station de base via l'émetteur-récepteur, des informations de configuration pour une transmission de signal basée sur une porteuse unique, et
recevoir, depuis la station de base via l'émetteur-récepteur, un signal de liaison descendante transmis sur un symbole pour une forme d'onde à porteuse unique selon les informations de configuration,

où le signal de liaison descendante est transmis sur le symbole pour la forme d'onde à porteuse unique à deux ou plusieurs terminaux incluant le terminal,
où le symbole pour la forme d'onde à porteuse unique est divisé en deux ou plusieurs parties de sous-symbole et les deux ou plusieurs parties de sous-symbole sont associées aux deux ou plusieurs terminaux, respectivement, et
où les informations de configuration incluent des informations concernant les ressources auxquelles la transmission de signal basée sur une porteuse unique est appliquée.

**14.** Terminal selon la revendication 13, où les informations concernant les ressources auxquelles la transmission de signal basée sur une porteuse unique est appliquée incluent des informations concernant l'attribution de ressources de fréquence continue ou des informations concernant l'attribution de ressources de fréquence discontinue, et
où les informations concernant l'attribution de ressources de fréquence discontinue sont basées sur l'entrelacement ou une attribution de ressources de type peigne.

**15.** Terminal selon la revendication 13, où une bande passante pour la forme d'onde à porteuse unique est supérieure à une bande passante d'un nombre maximal de blocs de ressources déterminé sur la base d'une bande passante de canal et d'un espacement de sous-porteuses.

[Fig. 1a]

**One subframe (110)**

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarrier

Resource block $N_{sc}^{RB}$ subcarrier (104)

Resource element (k,l) (101)

**Frequency**

**Time**

$K = 0$

$\bar{l} = 0$

$\bar{l} = 14 \cdot 2^{\mu} - 1$

[Fig. 1b]

[Fig. 1c]

[Fig. 2]

[Fig. 3]

[Fig. 4]

[Fig. 5a]

[Fig. 5b]

[Fig. 6a]

[Fig. 6b]

[Fig. 7a]

[Fig. 7b]

[Fig. 7c]

[Fig. 8aa]

[Fig. 8ab]

[Fig. 8ba]

[Fig. 8bb]

[Fig. 9a]

[Fig. 9ba]

903

Data stream #1 → Repetition or virtual copy → Serial-to-Parallel → ⋮ → M-point DFT

[Fig. 9bb]

Data stream #1 → Serial-to-Parallel → ⋮ → M-point DFT

907

RS → ⋮ → M-point DFT

[Fig. 9bc]

Data stream #1 → Spreading → Serial-to-Parallel → ⋮ → M-point DFT

[Fig. 9bd]

**909**

Parallel-to-Serial → Filter

[Fig. 10]

1001 Channel bandwidth F0 from TxRP#1

1003 DFT size

SSP 1005

1013 Data from TxRP#1

1015 Data from TxRP#2

time

1007 Channel bandwidth F0 from TxRP#2

1009 DFT size

SSP 1011

EP 3 895 361 B1

[Fig. 11]

[Fig. 12]

```
                         ┌──────────────┐
                         │    START     │
                         └──────┬───────┘
                                │
                                ▼
┌──────────────────────────────────────────────────────────────┐
│          DETERMINE SINGLE-CARRIER BANDWIDTH                     │────1200
└──────────────────────────────────────────────────────────────┘
                                │
                                ▼
┌──────────────────────────────────────────────────────────────┐
│   IDENTIFY DIFFERENCE VALUE BETWEEN SINGLE-CARRIER BANDWIDTH    │────1210
│                AND SUB-SYSTEM BANDWIDTH                          │
└──────────────────────────────────────────────────────────────┘
                                │
                                ▼
┌──────────────────────────────────────────────────────────────┐
│   ASSIGN CONTINUOUS OR DISCONTINUOUS RESOURCE TO BE USED        │────1220
│        FOR TRANSMISSION TO ONE OR MORE TERMINALS               │
└──────────────────────────────────────────────────────────────┘
                                │
                                ▼
┌──────────────────────────────────────────────────────────────┐
│            PERFORM SINGLE-CARRIER FILTERING                     │────1230
└──────────────────────────────────────────────────────────────┘
                                │
                                ▼
┌──────────────────────────────────────────────────────────────┐
│          TRANSMIT SIGNAL BASED ON SINGLE CARRIER               │────1240
└──────────────────────────────────────────────────────────────┘
                                │
                                ▼
                         ┌──────────────┐
                         │     END      │
                         └──────────────┘
```

[Fig. 13a]

```
                    ┌──────────────┐
                    │    START     │
                    └──────┬───────┘
                           │
                           ▼
┌──────────────────────────────────────────────────────┐
│  IDENTIFY SINGLE-CARRIER TRANSMISSION CONFIGURATION    │  ~ 1300
│                    INFORMATION                         │
└──────────────────────────┬─────────────────────────────┘
                           │
                           ▼
┌──────────────────────────────────────────────────────┐
│  IDENTIFY BANDWIDTH OF REFERENCE SIGNAL AND BANDWIDTH  │  ~ 1310
│                      OF DATA                           │
└──────────────────────────┬─────────────────────────────┘
                           │
                           ▼
┌──────────────────────────────────────────────────────┐
│          MAP DATA SYMBOL AND REFERENCE SIGNAL          │  ~ 1320
└──────────────────────────┬─────────────────────────────┘
                           │
                           ▼
┌──────────────────────────────────────────────────────┐
│            PERFORM SINGLE-CARRIER PRECODING            │  ~ 1330
└──────────────────────────┬─────────────────────────────┘
                           │
                           ▼
                    ┌──────────────┐
                    │     END      │
                    └──────────────┘
```

[Fig. 13b]

```
                    ┌──────────────┐
                    │    START     │
                    └──────────────┘
                           │
                           ▼
    ┌────────────────────────────────────────────────┐
    │        RECEIVE SIGNAL-CARRIER SYMBOL(S)         │────1340
    └────────────────────────────────────────────────┘
                           │
                           ▼
    ┌────────────────────────────────────────────────┐
    │     RECONSTRUCT FREQUENCY SIGNAL THROUGH FFT    │────1350
    └────────────────────────────────────────────────┘
                           │
                           ▼
    ┌────────────────────────────────────────────────┐
    │     OBTAIN CHANNEL INFORMATION THROUGH DMRS     │────1360
    └────────────────────────────────────────────────┘
                           │
                           ▼
    ┌────────────────────────────────────────────────┐
    │  COMPENSATE FOR CHANNEL BASED ON CHANNEL INFORMATION │────1370
    └────────────────────────────────────────────────┘
                           │
                           ▼
    ┌────────────────────────────────────────────────┐
    │ PERFORM IDFT BY USING ALREADY-RECEIVED SINGLE CARRIER INFORMATION │────1380
    │     (BANDWIDTH, LENGTH, OCCUPATION POSITION)    │
    └────────────────────────────────────────────────┘
                           │
                           ▼
    ┌────────────────────────────────────────────────┐
    │ DEMULTIPLEX AND RECONSTRUCT SYMBOL BY USING ALREADY-RECEIVED │────1390
    │     SINGLE CARRIER INFORMATION (COMB INFORMATION) │
    └────────────────────────────────────────────────┘
                           │
                           ▼
                    ┌──────────────┐
                    │     END      │
                    └──────────────┘
```

[Fig. 14]

1400

TxRP 2

1410

TxRP 1

1420

UE

TRANSMIT/RECEIVE SINGLE-CARRIER
BANDWIDTH INFORMATION AND
RESOURCE ASSIGNMENT INFORMATION 1430

SINGLE-CARRIER TRANSMISSION
CONFIGURATION INFORMATION 1440

TRANSMIT PDCCH 1450

TRANSMIT DATA BY USING
SINGLE CARRIER 1460

[Fig. 15]

1510          1520          1530          1500

TRANSCEIVER     CONTROLLER      MEMORY

[Fig. 16]

1610          1620          1630          1600

TRANSCEIVER     CONTROLLER      MEMORY

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018288749 A1, SUN JING
- US 2018302186 A1, REDDY AKULA